# EUROPEAN PATENT APPLICATION

(11) **EP 1 887 795 A1**
(43) Date of publication of application: **13.02.2008**
(21) Application number: 06747010.4
(22) Date of filing: 30.05.2006
(51) Int. Cl.: H04N 5/91, H04N 5/232, H04N 5/76

(54) **METADATA ADDING APPARATUS AND METADATA ADDING METHOD**

(30) Priority: 30.05.2005 JP 2005157179; 26.05.2006 JP 2006146909
(71) Applicant: MATSUSHITA ELECTRIC INDUSTRIAL CO., LTD., Osaka 571-8501 (JP)
(72) Inventor: INATOMI, Yasuaki c/o Matsushita Electric Industrial Co, Ltd, 2-1-61 Shiromi, Chuo-ku Osaka 540-6207 (JP); KAGEYAMA, Mitsuhiro c/o Matsushita Electric Industrial Co, Ltd, 2-1-61 Shiromi, Chuo-ku Osaka 540-6207 (JP); WAKABAYASHI, Tohru c/o Matsushita Electric Industrial Co, Ltd, 2-1-61 Shiromi, Chuo-ku Osaka 540-6207 (JP); TAKEMURA, Masashi c/o Matsushita Electric Industrial Co, Ltd, 2-1-61 Shiromi, Chuo-ku Osaka 540-6207 (JP)
(74) Representative: Zimmer, Franz-Josef
(86) International application number: PCT/JP2006/310782
(87) International publication number: WO 2006/129664

(57) **Abstract**

According to the invention, search and extraction of images obtained by capturing the same region are enabled to be performed at low load and in an easy manner. A multi-angle information generating apparatus 10 which groups images that are obtained by capturing by plural imaging apparatuses has: sensing metadata acquiring unit 101 which acquires sensor information relating to capturing conditions of the imaging apparatuses 20; focus-plane metadata deriving unit 102 which derives focus planes including the images taken by the imaging apparatuses 20, based on the acquired sensor information; grouping judging unit 103 which groups the images on the basis of positional relationships of the focus planes; and multi-angle metadata recording unit 104 which records results of the grouping as multi-angle information with correlating the information with the images.

## Description

### Technical Field

The present invention relates to a metadata adding apparatus which adds metadata to an image captured by an imaging apparatus, and a metadata adding method.

### Background Art

Conventionally, many apparatuses and methods of classifying and managing captured images according to subject matter have been proposed. Among them, there are a captured image processing apparatus which classifies captured images by means of image analysis according to object, and the like (for example, see Patent Reference 1). In the apparatus, still image data which are obtained by capturing by a digital camera or the like are automatically classified and managed according to object.

In many situations, there arises a need to classify captured images according to object. Other than still images, in a live sports program in which videos from cameras that are placed in plural places are broadcast, for example, there are cases such as that where it is desired to extract video portions relating to a certain decisive moment from plural video data, and edit the video portions so that the edited video portions are continuously broadcast as videos of the same object which are taken at different angles (multi-angle videos).
Patent Reference 1: JP-A-2004-356984 (page 6, Fig. 1)

### Disclosure of the Invention

### Problems that the Invention is to Solve

However, the conventional classification based on image analysis requires a large processing load. Therefore, it is not realistic to apply such classification to a purpose of classifying and extracting video portions in which the same object is captured, from videos each configured by plural image frames. For example, videos each configured by 30 image frames per second will be considered. In the case where predetermined videos are classified and extracted from videos each having a length of 60 seconds which are taken by three cameras, image analysis of 60 × 30 × 3 = 5,400 frames is required.

In the conventional classification based on image analysis, moreover, a correcting process is necessary in the case of images in which the object is captured in different manners, i.e., the angle and size of the object are different. Therefore, the recognition accuracy is sometimes poor. In the above example of a live sports program, the cameras are placed at different positions, and hence the object is always captured in different manners. Also from this point of view, it is difficult to classify and extract arbitrary portions of videos in image analysis.

For example, the case where, in a broadcast of a baseball game, a scene where a certain player hits a home run is to be continuously broadcast as videos of various angles will be considered. In such a case, conventionally, it is required to conduct an editing work in which respective videos are searched manually, i.e., visually, and pertinent portions are extracted and connected to one another.

The invention has been conducted in view of the above-discussed conventional circumstances. It is an object of the invention to provide a metadata adding apparatus and method in which search and extraction of images obtained by capturing the same region are enabled to be performed at low load and in an easy manner.

### Means for Solving the Problems

The apparatus for adding metadata of the invention is a metadata adding apparatus which adds the metadata to images captured by an imaging apparatus, and includes: a sensing information acquiring unit for acquiring sensor information relating to a capturing condition of the imaging apparatus; a focus-plane deriving unit for deriving a position of a focus plane which is an imaging plane of the captured image, based on the acquired sensor information; and a metadata adding unit for adding the derived position of the focus plane as the metadata to the captured image. According to the configuration, the position of focus plane is added as the metadata to the image, and the images are grouped on the basis of positional relationships of the focus planes. As compared with the conventional technique in which grouping is performed by image analysis, therefore, the processing load can be reduced. Consequently, search and extraction of images obtained by capturing the same region are enabled to be performed at low load and in an easy manner.

Furthermore, the metadata adding apparatus of the invention comprises: a grouping unit for grouping the images based on positional relationships among the focus planes; and an addition information recording unit for recording results of the grouping as addition information while correlating the addition information with the images. According to the configuration, a focus plane including a captured image is derived, and images are grouped on the basis of positional relationships of the focus planes. As compared with the conventional technique in which grouping is performed by image analysis, therefore, the processing load can be reduced. Consequently, search and extraction of images obtained by capturing the same region are enabled to be performed at low load and in an easy manner.

Furthermore, in the metadata adding apparatus of the invention, the grouping unit groups the images which have the focus planes intersected with each other, into a same group. According to the configuration, images can be grouped by means of calculation.

Furthermore, in the metadata adding apparatus of the invention, based on a table which stores the positional relationships among the focus planes, the grouping unit groups the images having the focus planes which are included in the positional relationships, into a same group. According to the configuration, when the positions of focus planes which are used for classifying images to the same group are previously determined, images can be grouped without conducting calculations.

The method of adding metadata of the invention is metadata adding method of adding metadata to an image captured by an imaging apparatus, and has: a sensing information acquiring step of acquiring sensor information relating to a capturing condition of the imaging apparatus; a focus-plane deriving step of deriving a position of a focus plane which is an imaging plane of the captured image, based on the acquired sensor information; and a metadata adding step of adding the derived position of the focus plane as the metadata to the captured image.

Furthermore, the metadata adding method of the invention has a grouping step of grouping the images based on positional relationships among the focus planes; and an addition information recording step of recording results of the grouping as addition information while correlating the adition information with the images.

In the metadata adding method of the invention, the grouping step groups images which have focus planes intersected with each other, into a same group.

In the metadata adding method of the invention, based on a table which stores the positional relationships among the focus planes, the grouping step groups the images having the focus planes which are included in the positional relationships, into a same group.

### Effects of the Invention

According to the invention, the positions of focus planes are added as metadata to images, and the images are grouped on the basis of positional relationships of the focus planes. As compared with the conventional technique in which grouping is performed by image analysis, therefore, the processing load can be reduced, and grouping of motion pictures which are obtained by capturing the same imaging region and same object can be realized at higher accuracy. Consequently, search and extraction of images obtained by capturing the same region are enabled to be performed at low load and in an easy manner.

### Brief description of the drawings

[Fig. 1] Fig. 1 is a diagram showing the internal configuration of a multi-angle information generating apparatus in an embodiment of the invention, and the configuration of a multi-angle information generating system including the multi-angle information generating apparatus.
[Fig. 2] Fig. 2 is a diagram showing the internal configuration of an imaging apparatus which is used in the multi-angle information generating system in the embodiment of the invention.
[Fig. 3] Fig. 3 is a flowchart showing the operation procedure of the imaging apparatus which is used in the multi-angle information generating system in the embodiment of the invention.
[Fig. 4] Fig. 4 is a flowchart showing the procedure of a video recording operation of the imaging apparatus.
[Fig. 5] Fig. 5 is a flowchart showing the procedure of a sensing metadata generating operation of the imaging apparatus.
[Fig. 6] Fig. 6 is a view diagrammatically showing the data structure of generated sensing metadata.
[Fig. 7] Fig. 7 is a flowchart showing the procedure of a multi-angle information generating operation of the multi-angle information generating apparatus in the embodiment of the invention.
[Fig. 8] Fig. 8 is a diagram illustrating a focus plane.
[Fig. 9] Fig. 9 is a flowchart showing the procedure of a focus plane deriving operation of the multi-angle information generating apparatus.
[Fig. 10] Fig. 10 is a view diagrammatically showing the data structure of generated focus-plane metadata.
[Fig. 11] Fig. 11 is a flowchart showing the procedure of a multi-angle metadata generating operation of the multi-angle information generating apparatus.
[Fig. 12] Fig. 12 is a diagram illustrating judgment of intersection of focus planes.
[Fig. 13] Fig. 13 is a flowchart showing the procedure of a grouping judging operation of the multi-angle information generating apparatus.
[Fig. 14] Fig. 14 is a view diagrammatically showing the data structure of generated multi-angle metadata.
[Fig. 15] Fig. 15 is a diagram illustrating judgment of existence in a predetermined region of a focus plane.
[Fig. 16] Fig. 16 is a view illustrating a grouping rule which is generated by designating position information of plural regions.
[Fig. 17] Fig. 17 is a flowchart showing the procedure of a grouping judging operation of a multi-angle information generating apparatus under judgment conditions in Embodiment 2.
[Fig. 18] Fig. 18 is a view diagrammatically showing the data structure of generated multi-angle metadata.
[Fig. 19] Fig. 19 is a diagram showing the internal configuration of an addition information generating apparatus in Embodiment 3 of the invention, and the configuration of an addition information generating system including the addition information generating apparatus.
[Fig. 20] Fig. 20 is a diagram showing the internal configuration of an imaging apparatus which is used in the addition information generating system in Embodiment 3 of the invention.
[Fig. 21] Fig. 21 is a flowchart showing the operation procedure of the imaging apparatus which is used in the addition information generating system in Embodiment 3 of the invention.
[Fig. 22] Fig. 22 is a flowchart showing the procedure of a video recording operation of the imaging apparatus.
[Fig. 23] Fig. 23 is a flowchart showing the procedure of a sensing metadata generating operation of the imaging apparatus.
[Fig. 24] Fig. 24 is a view diagrammatically showing the data structure of generated sensing metadata.
[Fig. 25] Fig. 25 is a flowchart showing the procedure of an addition information generating operation of the addition information generating apparatus in the embodiment of the invention.
[Fig. 26] Fig. 26 is a diagram illustrating a focus plane.
[Fig. 27] Fig. 27 is a flowchart showing the procedure of a focus plane deriving operation of the addition information generating apparatus.
[Fig. 28] Fig. 28 is a view diagrammatically showing the data structure of generated focus-plane metadata.
[Fig. 29] Fig. 29 is a flowchart showing the procedure of an addition metadata generating operation of the addition information generating apparatus.
[Fig. 30] Fig. 30 is a view showing an image of combinations of all frames.
[Fig. 31] Fig. 31 is a diagram illustrating judgment of intersection of focus planes.
[Fig. 32] Fig. 32 is a flowchart showing the procedure of a grouping judging operation of the addition information generating apparatus.
[Fig. 33] Fig. 33 is a view diagrammatically showing the data structure of generated addition metadata.

### Description of Reference Numerals and Signs

- 10: multi-angle information generating apparatus
- 20, 1020: imaging apparatus
- 30, 130: database
- 40: multi-angle video searching apparatus
- 101, 1101: sensing metadata acquiring unit
- 102, 1102: focus-plane metadata deriving unit
- 103, 1103: grouping judging unit
- 104: multi-angle metadata recording unit
- 201: lens group
- 202, 1202: CCD
- 203, 1203: driving circuit
- 204, 1204: timing signal generating unit
- 205, 1205: sampling unit
- 200, 1206: A/D converting unit
- 207, 1207: video file generating unit
- 208, 1208: video address generating unit
- 209, 1209: video identifier generating unit
- 210, 1210: machine information sensor
- 211, 1211: sensing metadata generating unit
- 212, 1212: recording unit
- 1010: addition information generating apparatus
- 1040: video searching apparatus
- 1104: metadata recording unit

### Best Mode for Carrying Out the Invention

Hereinafter, metadata adding apparatuses according to embodiments of the invention will be described in detail with reference to the accompanying drawings. In Embodiments 1 and 2, an example in which the metadata adding apparatus is executed as a multi-angle information generating apparatus is shown, and, in Embodiment 3, an example in which the metadata adding apparatus is executed as an addition information generating apparatus is shown.

### [Embodiment 1]

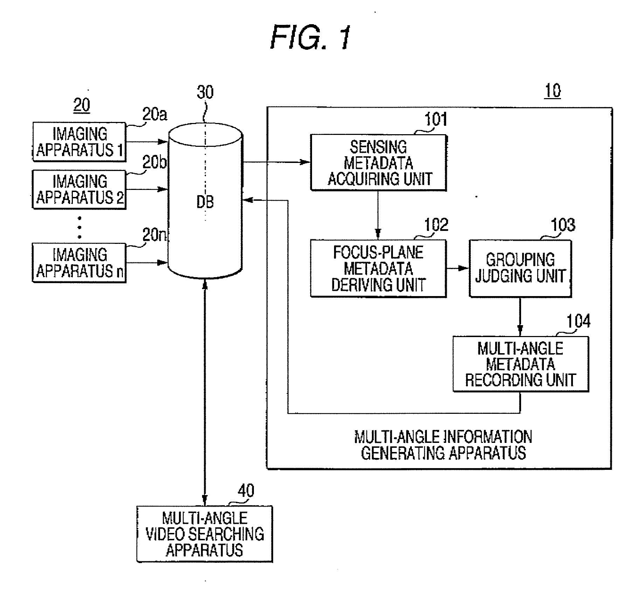

Fig. 1 is a diagram showing the internal configuration of the multi-angle information generating apparatus in the embodiment of the invention, and the configuration of a multi-angle information generating system including the multi-angle information generating apparatus. The multi-angle information generating system shown in Fig. 1 includes: the multi-angle information generating apparatus 10 which groups images that are obtained by capturing by plural imaging apparatuses; the plural imaging apparatuses 20 (20a to 20n); a database 30; and a multi-angle video searching apparatus 40. Hereinafter, an example in which the multi-angle information generating system groups videos configured by plural images will be described.

The multi-angle information generating apparatus 10 includes a sensing metadata acquiring unit 101, a focus-plane metadata deriving unit 102, a grouping judging unit 103, and a multi-angle metadata recording unit 104.

The sensing metadata acquiring unit 101 acquires sensor information relating to capturing conditions of the imaging apparatuses 20. The sensing metadata acquiring unit 101 obtains sensing metadata relating to the position, azimuth, elevation angle, field angle, and focus distance of each of the imaging apparatuses via the database 30. In the embodiment, the sensing metadata are assumed to be generated by the imaging apparatuses 20. The internal structure of the imaging apparatuses 20, and the detail of the sensing metadata will be described later.

The focus-plane metadata deriving unit 102 derives focus planes which are imaging planes of images captured by the imaging apparatuses 20, based on the obtained sensing metadata, and calculates as coordinate values rectangles which indicate capturing focus planes in real spaces of the imaging apparatuses 20, on the basis of the sensing metadata. The focus-plane metadata will be described later in detail.

The grouping judging unit 103 groups images on the basis of positional relationships of the focus planes. While using the focus plane of each of the imaging apparatuses derived by the focus-plane metadata deriving unit 102, the grouping judging unit judges whether the images are obtained by capturing the same region or not, on the basis of predetermined judgment conditions.

The multi-angle metadata recording unit 104 records results of the grouping as multi-angle information with correlating the information with images, and outputs and records information which is correlated with images which are judged to be those obtained by capturing the same region, as multi-angle metadata into the database 30. The multi-angle metadata will be described later in detail.

The multi-angle information generating apparatus 10 is connected to the database 30 which stores video data from the plural imaging apparatuses 20, produces the multi-angle metadata as information related to correlation of plural video data which are obtained by capturing the same object at the same time, on the basis of the sensing metadata obtained from the imaging apparatuses, and outputs the data to the database 30. The multi-angle video searching apparatus 40 which is connected to the database 30 can search video data on the basis of the multi-angle metadata.

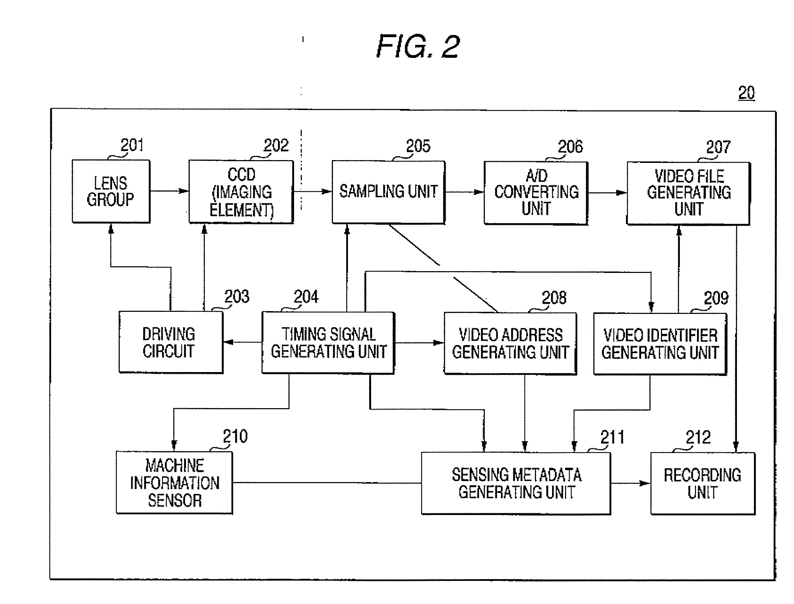

Next, the imaging apparatuses will be described. Fig. 2 is a diagram showing the internal configuration of an imaging apparatus which is used in the multi-angle information generating system in the embodiment of the invention. The imaging apparatus 20 includes a lens group 201, a CCD 202, a driving circuit 203, a timing signal generating unit 204, a sampling unit 205, an A/D converting unit 206, a video file generating unit 207, a video address generating unit 208, a video identifier generating unit 209, a machine information sensor 210, a sensing metadata generating unit 211, and a recording unit 212.

The CCD 202 is driven in synchronization with a timing signal generated by the timing signal generating unit 204 connected to the driving circuit 203, and outputs an image signal of an object image which is incident through the lens group 201, to the sampling unit 205.

The sampling unit 205 samples the image signals at a sampling rate which is specific to the CCD 202. The A/D converting unit 206 converts the image signal output from the CCD 202 to digital image data, and outputs the data to the video file generating unit 207.

The video address generating unit 208 starts to produce a video address in response to a signal from the timing signal generating unit 204. The video identifier generating unit 209 issues and adds an identifier (for example, a file name or an ID) which correlates a video with sensing metadata described later.

The machine information sensor 210 is configured by a GPS (Global Positioning System) receiver, a gyro sensor, an azimuth sensor, a range sensor, and a field angle sensor.

The GPS receiver receives radio waves from satellites to obtain distances from three or more artificial satellites the positions of which are previously known, whereby the three-dimensional position (latitude, longitude, altitude) of the GPS receiver itself can be obtained. When this function is used, it is possible to obtain the absolute position of the imaging apparatus on the earth.

The gyro sensor is generally called a three-axis acceleration sensor, and uses the gravity of the earth to detect the degree of acceleration in the direction of an axis as viewed from the sensor, i.e., the degree of inclination in the direction of an axis as a numerical value. When this function is used, it is possible to obtain the inclination (azimuth angle, elevation angle) of the imaging apparatus.

The azimuth sensor is generally called an electronic compass, and uses the magnetism of the earth to detect the direction of north, south, east, or west on the earth. When the gyro sensor is combined with the azimuth sensor, it is possible to indicate the absolute direction of the imaging apparatus on the earth.

The range sensor is a sensor which measure the distance to the object. The sensor emits an infrared ray or an ultrasonic wave from the imaging apparatus toward the object, and can know the distance from the imaging apparatus to the object, i.e., the focus distance by which focusing is to be obtained, from the time which elapses until the imaging apparatus receives the reflection.

The field angle sensor can obtain the field angle from the focal length and the height of the CCD. The focal length can be obtained by measuring the distance between a lens and a light receiving portion, and the height of the light receiving portion is a value which is specific to the imaging apparatus.

On the bases of an output request from the sensing metadata 211, the machine information sensor 210 outputs sensing information relating to the position of the imaging apparatus, the azimuth which will be used as a reference, the azimuth angle, the elevation angle, the field angle, and the focus distance, from the GPS (Global Positioning System) receiver, the gyro sensor, the azimuth sensor, the range sensor, and the field angle sensor. The sensing metadata generating unit 211 obtains the sensing information from the machine information sensor 210 in accordance with a video address generating timing from the video address generating unit 208, produces the sensing metadata, and outputs the data to the recording unit 212. The machine information sensor 210 and the sensing metadata generating unit 211 start to operate in response to a signal from the timing signal generating unit 204.

The production and output of the sensing information are not related to the primary object of the present application, and therefore detailed description of the operation of the sensor is omitted.

The acquisition of the sensing information may be performed at the sampling rate (1/30 sec.) of the CCD, or may be performed every several frames.

In the case where photographing is performed indoors, or where a GPS sensor does not operate, the position information of the capturing place may be manually input. In this case, position information which is input through inputting unit that is not shown is input into the machine information sensor.

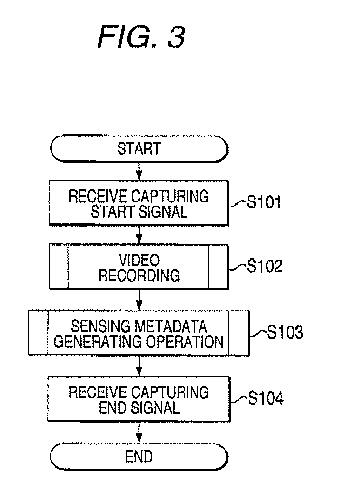

Hereinafter, the sensing metadata generating operation of the imaging apparatus having the above-described configuration will be described. Fig. 3 is a flowchart showing the operation procedure of the imaging apparatus which is used in the multi-angle information generating system in the embodiment of the invention.

First, when depression of a predetermined switch of a main unit of the imaging apparatus, or the like is performed, a capturing start signal is received (step S101). Then, the imaging apparatus 20 starts a video recording process (step S102), and the imaging apparatus 20 starts a process of generating the sensing metadata (step S103). When the timing signal generating unit 204 receives a capturing end signal, the imaging apparatus 20 terminates the video recording process and the sensing metadata generating process (step S104).

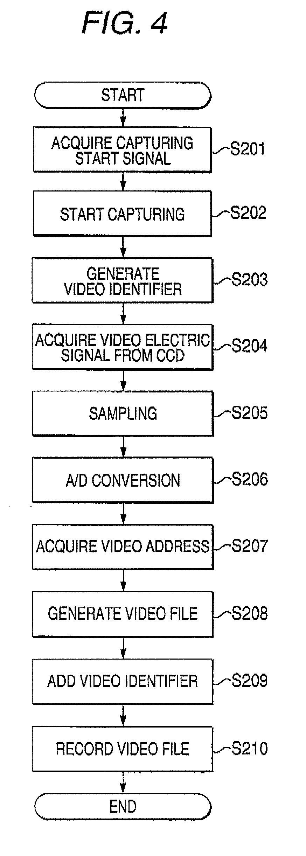

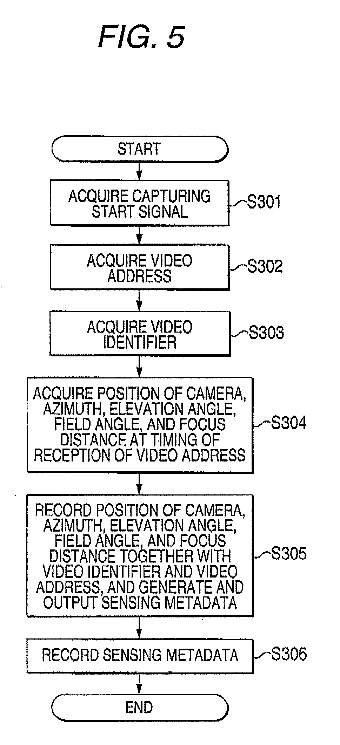

The video recording process which is started in step S102, and the sensing metadata generating process which is started in step S103 will be described with reference to Figs. 4 and 5.

Fig. 4 is a flowchart showing the procedure of the video recording operation in step S102. When the capturing start signal is acquired (step S201), the capturing operation is started in response to an operation instruction command from the timing signal generating unit 204 (step S202). Moreover, a video identifier is generated by the video identifier generating unit 209 in response to an instruction command from the timing signal generating unit 204 (step S203).

A video electric signal from the CCD 202 is acquired (step S204), the sampling unit 205 performs sampling on the acquired signal (step S205), and the A/D converting unit 206 performs conversion to digital image data (step S206).

A video address generated by the video address generating unit 208 is acquired in response to an instruction command from the timing signal generating unit 204 (step S207), and a video file is generated by the video file generating unit 207 (step S208). Furthermore, the video identifier generated by the video identifier generating unit 209 is added (step S209), and the final video file is recorded into the recording unit 212 (step S210).

Fig. 5 is a flowchart showing the procedure of the sensing metadata generating operation in step S103. When the capturing start signal is acquired (step S301), the sensing metadata generating unit 211 acquires the video address generated by the video address generating unit 208 (step S302). The video identifier generated by the video identifier generating unit 209 is acquired (step S303). Furthermore, the sensing metadata generating unit 211 issues a request for outputting the sensing information to the machine information sensor 210 simultaneously with the acquisition of the video address, to acquire information of the position of the camera, the azimuth angle, the elevation angle, the field angle, and the focus distance. The position of the camera can be acquired from the GPS receiver, the azimuth angle and the elevation angle can be acquired from the gyro sensor, the focus distance can be acquired from the range sensor, and the field angle can be acquired from the field angle sensor (step S304).

Next, the sensing metadata generating unit 211 records the camera position, the azimuth angle, the elevation angle, the field angle, and the focus distance together with the video identifier and video address which are acquired, produces and outputs the sensing metadata (step S305), and records the data into the recording unit 212 (step S306).

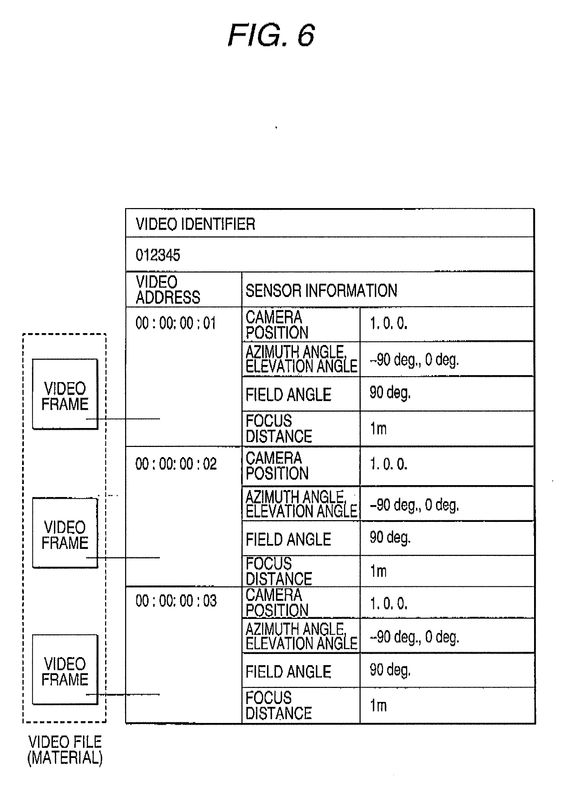

Fig. 6 is a view diagrammatically showing the data structure of generated sensing metadata. A video identifier is added to a series of video data configured by an arbitrary number of frames. By the video identifier, the video data are allowed to uniquely correspond to the sensing metadata. For each video address, the camera coordinates, the azimuth angle, the elevation angle, the field angle, and the focus distance are recorded. The minimum unit of the video address is the sampling rate of the CCD 202, i.e., a frame. For example, "12345" which is information acquired from the video identifier generating unit 209 is input into the video identifier of Fig. 6. Moreover, "00:00:00:01" which is information acquired from the video address generating unit 208 is input into the video address. Into the video address "00:00:00:01", the camera position "1, 0, 0", the azimuth and elevation angles "-90 deg., 0 deg.", the field angle "90 deg.", and the focus distance "1 m" which are information acquired from the machine information sensor 210 at the timing when the video address is acquired are input. The camera position is expressed by "x, y, z" where x indicates the latitude, y indicates the longitude, and z indicates the altitude (above sea level). The actually input values are the latitude, longitude, and altitude which are acquired by the GPS receiver. In the embodiment, however, it is assumed that latitude x = 1, longitude y = 0, and altitude z = 0 are obtained, for the sake of simplicity in description. Into the next video address, "00:00:00:02" which is information acquired from the video address generating unit 208 is input. Into the video address "00:00:00:02", the camera position "1, 0, 0", the azimuth and elevation angle "-90 deg., 0 deg.", the field angle "90 deg.", and the focus distance "1 m" which are information acquired from the machine information sensor 210 at the timing when the video address is acquired are input. Into the next video address, "00:00:00:03" which is information acquired from the video address generating unit 208 is input. Into the video address "00:00:00:03", the camera position "1, 0, 0", the azimuth and elevation angle "-90 deg., 0 deg.", the field angle "90 deg.", and the focus distance "1 m" which are information acquired from the machine information sensor 210 at the timing when the video address is acquired are input.

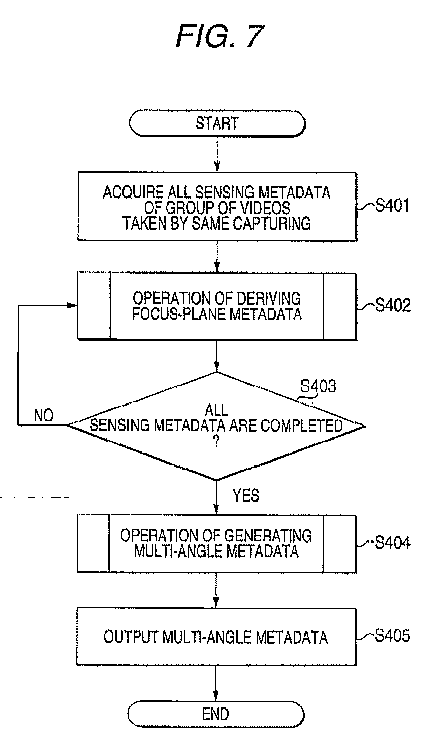

Next, a multi-angle information generating operation of the multi-angle information generating apparatus having the above-described configuration will be described. Fig. 7 is a flowchart showing the procedure of the multi-angle information generating operation of the multi-angle information generating apparatus in the embodiment of the invention.

First, the sensing metadata acquiring unit 101 of the multi-angle information generating apparatus 10 acquires all sensing metadata of a group of videos which are taken at the same time by the plural imaging apparatuses 20 (step S401). Next, the focus-plane metadata deriving unit 102 derives focus-plane metadata on the basis of the acquired sensing metadata (step S402).

Then, the focus-plane metadata deriving unit 102 determines whether the derivation of focus-plane metadata is completed for all of sensing metadata or not. If not completed, the operation of deriving focus-plane metadata in step S402 is repeated. By contrast, if the derivation of focus-plane metadata is completed for all of sensing metadata, the process then transfers to the operation of generating multi-angle metadata (step S403). Next, the grouping judging unit 103 produces multi-angle metadata on the basis of the focus-plane metadata acquired from the focus-plane metadata deriving unit 102 (step S404).

Finally, the multi-angle metadata recording unit 104 outputs the multi-angle metadata acquired from the grouping judging unit 103, toward the database 30 (step S405).

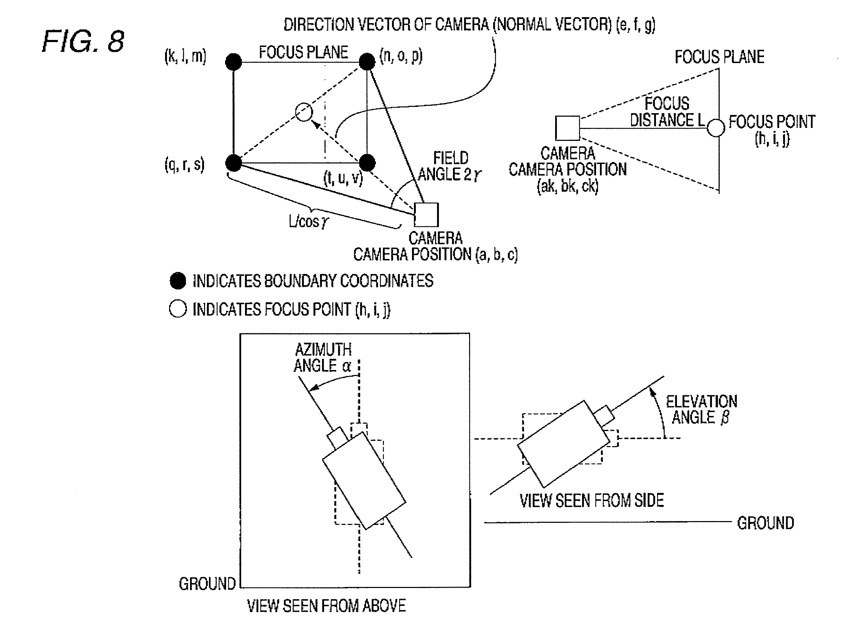

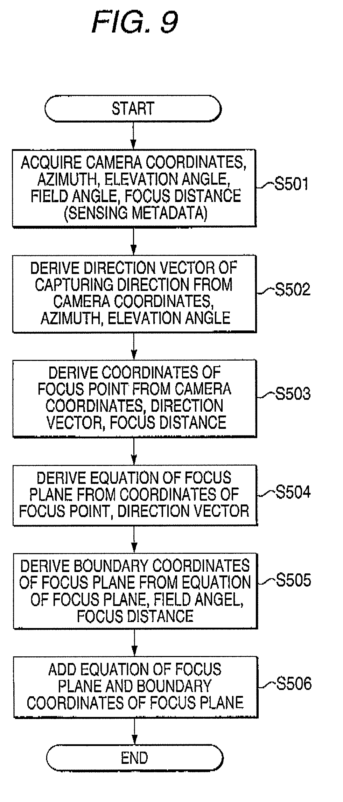

The operation of deriving focus-plane metadata in step S402 will be described with reference to Figs. 8 and 9. Fig. 8 is a diagram illustrating a focus plane. A focus plane is a rectangular plane indicating an imaging region where, when capturing is performed, the focus, or the so-called focal point is attained, and can be expressed by coordinate values of the four corners of the rectangle (referred to as boundary coordinates). As shown in the figure, the distance from the imaging apparatus (camera) to the focus plane is determined by the focus distance, i.e., the focal length, and the size of the rectangle is determined by the field angle of the camera. The center of the rectangle is the focal point.

The flowchart of Fig. 9 showing the procedure of the focus plane deriving operation of the multi-angle information generating apparatus will be described. First, the focus-plane metadata deriving unit 102 acquires sensing metadata (step S501).

In the case where, as shown in Fig. 8, the sensing information in an arbitrary camera and at an arbitrary timing is the camera position of (a, b, c), the azimuth angle of α deg., the elevation angle of β deg., the field angle of 2γ deg., and the focus distance of L (m), the direction vector of the camera in which the camera position of (a, b, c) is set as the original can be obtained from the azimuth angle of α deg. and the elevation angle of β deg. From the sensing information, the direction vector of the camera is (-sin α cos β, cos α cos β, sin β). The obtained direction vector of the camera is assumed as (e, f, g). The camera direction vector (e, f, g) perpendicularly penetrates the focus plane, and hence is a normal vector to the focus plane (step S502).

Next, from the camera direction vector (e, f, g) and the camera position (a, b, c), the equation of the straight line passing the camera position (a, b, c) and the focus point can be derived. When an intermediate parameter z is used, the equation of the straight line can be expressed as (ez, fz, gz). From the equation of the straight line, the coordinates which are on the straight line, and which are separated by a distance L from the camera position (a, b, c) can be derived as a focus point. The expression for obtaining is L = √ (ez - a)² + (fz - b)² + (gz - c)². The intermediate parameter z is derived from this expression. When L = √(ez-a)² + (fz - b)² + (gz - c)² is solved, z = {(ae + bf + cg) ± √ (ae + bf + cg)² - (e + f + g)(a2 + b2 + c2 - L2)}/ (e + f + g) is obtained, and the focus point is attained by substituting the obtained z in (ez, fz, gz) (step S503).

The obtained focus point is expressed as (h, i, j). The equation of the focus plane can be derived from the normal vector (e, f, g) and the focus point (h, i, j). The equation of the focus plane is ex + fy + gz = eh + fi + gj (step S504).

From the field angle of 2γ deg., the distance from the camera position (a, b, c) to the boundary coordinates of the focus plane is Ucos γ. It can be the that the boundary coordinates are coordinates which exist on a sphere centered at the camera position (a, b, c) and having a radius of Ucos γ, and in the focus plane obtained in the above. The equation of the sphere centered at the camera position (a, b, c) and having a radius of L/cos γ is (x -a)² + (y - b)² + (z -c)² = (L/cos γ)².

The features of the plane to be captured by the camera, i.e., those that a horizontal shift does not occur (namely, the height (z-axis) of the upper side of the plane is constant, and also the height (z-axis) of the lower side is constant), and that the ratio of the length and the width in the focus plane is fixed are used as conditions for solving the equation. Since z is constant (namely, the height (z-axis) of the upper side of the plane is constant, and also the height (z-axis) of the lower side is constant), z can be set as two values z1 and z2. From the above, equations of ex + fy + gz1 = eh + fi + gj, ex + fy + gz2 = eh + fi + gj, (x -a)² + (y - b)² + (z1 - c)² = (L/COS γ)², and (x -a)² + (y - b)² + (z2 - c)² = (L/cos γ)² are obtained.

When the four equations are solved, four boundary coordinates in which the values of x and y are expressed respectively by z1 and z2 can be derived. First, the case where z is z1 or ex + fy + gz1 = eh + fi + gj and (x -a)² + (y - b)² + (z1 - c)² = (L/cos γ)² will be considered. For the sake of simplicity, eh + fi + gj - gz1 = A, (z1 - c)² = B, and (L/cos γ)² = C are set, and then x + fy + gz1 = A and (x - a)² + (y - b)² + B = C are obtained. When x is eliminated from the two equations and A - ea = D, e²(B - C) = E, e² + f² = F, -(2DF + 2be²) = G, and e²b² + E = H are set, Fy² + Gy + H - 0 is obtained, and the value of y is y = (-G ± √G² - 4FH). Similarly, x = (A - f(-G ± √G² - 4FH)/2F) can be obtained. For the sake of simplicity, the obtained x and y are set as X1, Y1, X2, Y2, respectively.

Next, x and y are obtained also in the case where z is z2 or ex + fy + gz2 = eh + fi + gj and (x-a)² + (y - b)² + (z2 - c)² = (L/cos γ)². The deriving method in the case of z2 is identical with that in the case of z1, and hence its description is omitted. The obtained x and y are set as X3, Y3, X4, Y4, respectively. Therefore, the four boundary coordinates are (X1, Y1, Z1), (X2, Y2, Z1), (X3, Y3, Z2), and (X4, Y4, Z2).

Since the ratio of the length and the width in the focus plane is fixed (here, length : width = P : Q), the length of the upper side : the length of the right side = P : Q and the length of the lower side : the length of the left side = P : Q can be derived. Diagrammatically, (X1, Y1, Z1), (X2, Y2, Z1), (X3, Y3, Z2), and (X4, Y4, Z2) are set as the upper left (X1, Y1, Z1), the upper right (X2, Y2, Z1), the lower left (X3, Y3, Z2), and the lower right (X4, Y4, Z2). The length of the upper side = √(X1 - X2)² + (Y1 - Y2)², the length of the right side = √(X2 - X4)² + (Y2 - Y4)² + (Z1 - Z2)², the length of the lower side = √(X3 - X4)² + (Y3 - Y4)², and the length of the left side = √(X1 - X3)² + (Y1 - Y3)² + (Z1 - Z2)². Therefore, √(X1 - X2)² + (Y1 - Y2)² : √(X2 - X4)² + (Y2 - Y4)² + (Z1 - Z2)² = P : Q, and √(X3 - X4)² + (Y3 - Y4)² ; √(X1 - X3)² + (Y1 - Y3)² + (Z1 - Z2)² = P : Q are attained, and two equations can be obtained. The upper left (X1, Y1, Z1), the upper right (X2, Y2, Z1), the lower left (X3, Y3, Z2), and the lower right (X4, Y4, Z2) are values expressed by z1 and z2. When the replacement for the simplification is returned to the original one, therefore, simultaneous equations for z1 and z2 can be obtained from √(X1 - X2)² + (Y1 - Y2)²: √(X2 - X4)² + (Y2 - Y4)² + (Z1 - Z2)² = P : Q, and √(X3 - X4)² + (Y3 - Y4)² : √(X1 - X3)² + (Y1 - Y3)² + (Z1 - Z2)² = P : Q, and z1 and z2 can be obtained. The expressions of z1 and z2 are complicated, and hence their description is omitted. When the obtained z1 and z2 are substituted in the upper left (X1, Y1, Z1), the upper right (X2, Y2, Z1), the lower left (X3, Y3, Z2), and the lower right (X4, Y4, Z2), it is possible to obtain boundary coordinates. The obtained boundary coordinates are set as the upper left (k, I, m), the upper right (n, o, p), the lower left (q, r, s), and the lower right (t, u, v) (step S505).

Finally, the focus-plane metadata deriving unit 102 adds the calculated boundary coordinate information of the four point to sensing metadata for each of the video addresses, to produce the data as focus-plane metadata (step S506).

Hereinafter, the method of deriving the focus plane and the boundary coordinates will be described by actually using the sensing metadata of Fig. 6. The sensing metadata of Fig. 6 which are used in the description are the camera position (1, 0, 0), the azimuth and elevation angles "-90 deg., 0 deg.", the field angle "90 deg.", and the focus distance "1 m" at the video address "00:00:00:01". First, the azimuth and elevation angles "-90 deg., 0 deg." are decomposed into x, y, and z components having a magnitude of 1, and the vector indicating the camera direction is (-1, 0, 0) from the difference with respect to the camera position (1, 0, 0). The vector indicating the camera direction is a normal vector to the focus plane.

Next, from the normal vector (-1, 0, 0) and the camera position (1, 0, 0), it is possible to obtain the equation of a straight line in which the normal vector is (-1, 0, 0), and which passes the camera position (1, 0, 0). The equation of the straight line is y = 0, z = 0. The coordinates which is on the straight line, and in which the focus distance from the camera position (1, 0, 0) is 1, i.e., the coordinates of the focus point are (0, 0, 0) from the equation of the straight line y = 0, z = 0 and the focus distance = 1.

Next, from the coordinates (0, 0, 0) of the focus point and the normal vector (-1, 0, 0), the equation of the focus plane is derived. From the coordinates (0, 0, 0) of the focus point and the normal vector (-1, 0, 0), the equation of the focus plane is x = 0.

Since the field angle is 90 deg., the distance to the boundary coordinates on the focus plane is 1/cos 45°, i.e., √2. It can be said that the boundary coordinates exist on a sphere having a radius of √2 and centered at the camera position (1, 0, 0), and in the focus plane. The equation of the sphere having a radius of √2 and centered at the camera position (1, 0, 0) is (x - 1)² + y² + z² = 2. From the sphere equation (x - 1)² + y² + z² = 2 and the equation of the focus plane x = 0, y² + z² = 1 can be derived. When it is assumed that the screen size captured by the camera has a ratio of the length and width of 4 : 3, z = 4/3y is obtained. When solving y² + z² = 1 and z = 4/3y, y = ± 3/5 and z = ± 4/5 can be derived. Therefore, the boundary coordinates are (0, 3/5, 4/5), (0, -3/5, 4/5), (0, -3/5, -4/5), and (0, 3/5, -4/5).

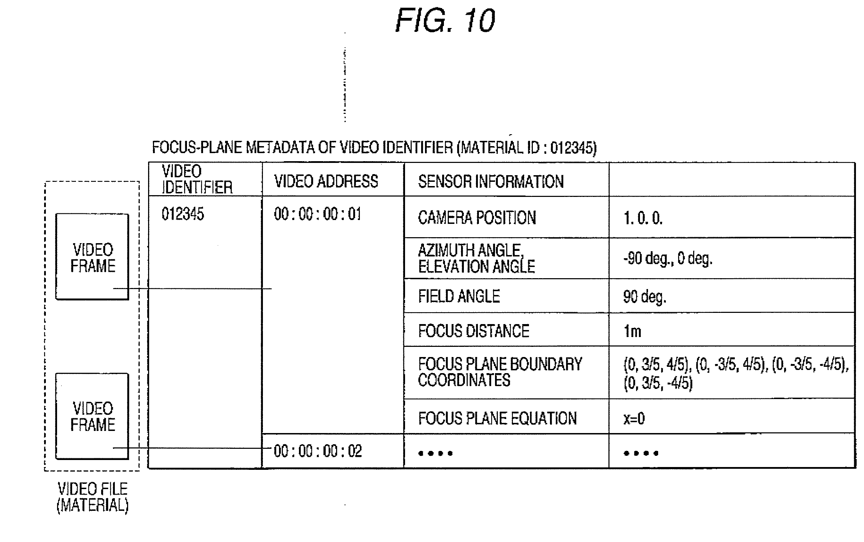

Fig. 10 is a view diagrammatically showing the data structure of the generated focus-plane metadata. For each video address, the boundary coordinates of the focus plane and the equation of the focus plane are recorded. In Fig. 10, the items of "Focus plane boundary coordinates" and "Focus plane equation" which are derived as described above are added to the video address "00:00:00:01" shown in Fig. 6, "(0, 3/5, 4/5), (0, -3/5, 4/5), (0, -3/5, -4/5), and (0, 3/5, -4/5)" is input into "Focus plane boundary coordinates", and "x = 0" is input into "Focus plane equation".

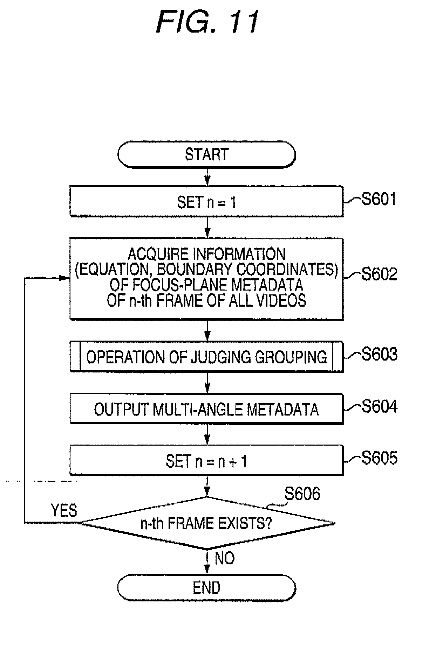

Next, the operation of generating multi-angle metadata in step S404 will be described with reference to Fig. 11. Fig. 11 is a flowchart showing the procedure of the multi-angle metadata generating operation of the multi-angle information generating apparatus. First, a constant n is initialized to 1 (step S601), and the grouping judging unit 103 obtains information (equation and boundary coordinates) of the focus-plane metadata of an n-th frame of all videos (step S602), and executes a grouping judging operation (step S603). Next, the grouping judging unit 103 outputs the generated multi-angle metadata to the multi-angle metadata recording unit 104 (step S604). Then, the constant n is incremented by 1 (step S605), and the grouping judging unit 103 judges whether the next video frame (n-th frame) exists or not (step S606). If the next video frame exists, the process returns to step S602, and repeats the multi-angle metadata generating operation. By contrast, if the next video frame does not exist, the multi-angle metadata generating operation is ended.

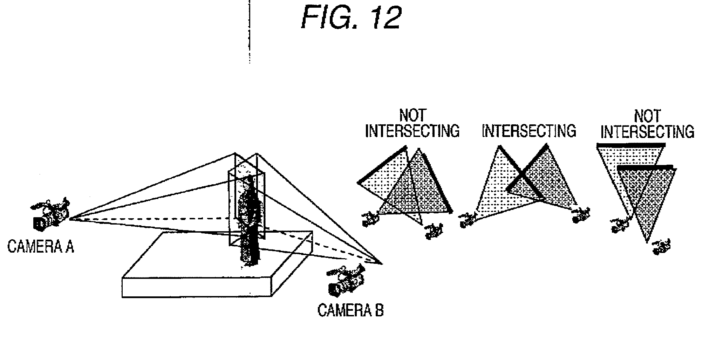

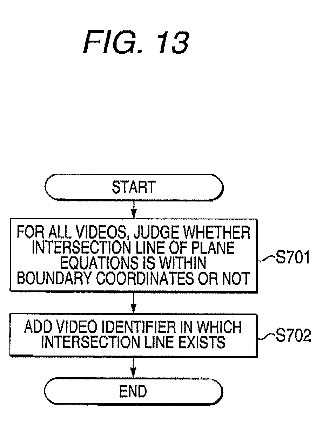

The grouping judging operation in step S603 will be described with reference to Figs. 12 and 13. The grouping judging operation is an operation of, based on predetermined judgment conditions, grouping video data which are obtained by capturing the same object, from plural video data which are captured at the same time. In Embodiment 1, images in which focus planes intersect with each other are classified into the same group. In Embodiment 1, namely, "judgment of intersection of focus planes" is performed as judgment conditions of grouping. Fig. 12 is a diagram illustrating the judgment of intersection of focus planes. As shown in the figure, video data of cameras (imaging apparatuses) in which focus planes intersect with each other are judged as video data which are obtained by capturing the same object, and video data in which focus planes do not intersect with each other are judged as video data which are obtained by capturing different objects.

Fig. 13 is a flowchart showing the procedure of the grouping judging operation of the multi-angle information generating apparatus. First, for all of the acquired focus-plane metadata, the grouping judging unit 103 judges whether an intersection line of plane equations is within the boundary coordinates or not (step S701). If the intersection line of plane equations is within the boundary coordinates, corresponding video identifier information and a video address indicating the n-th frame are added to the focus-plane metadata to be generated as multi-angle metadata (step S702).

Hereinafter, the grouping judging method will be described by actually using the focus-plane metadata of Fig. 10. Into the focus-plane metadata of Fig. 10, "012345" is input as "Video identifier", "(0, 3/5, 4/5), (0, -3/5, 4/5), (0, -3/5, -4/5), and (0, 3/5, -4/5)" are input as "Focus plane boundary coordinates", and "x = 0" is input as "Focus plane equation". Here, it is assumed that another focus-plane metadata exists in which "Video identifier" is "543210", "Focus plane boundary coordinates" are "(3/5, 0, 4/5), (-3/5, 0, 4/5), (-3/5, 0, -4/5), and (3/5, 0, -4/5)", and "Focus plane equation" is "y = 0". Since the equations of the focus planes are "x = 0" and "y = 0", the equation of the intersection line is "x = 0, y = 0".

Next, it is judged whether the intersection line of the plane equations is within the boundary coordinates or not, In the boundary ranges of -3/5 ≤ x ≤ 3/5, -3/5 ≤ y ≤ 3/5, and -4/5 ≤ z ≤ 4/5 expressed by the boundary coordinates "(0, 3/5, 4/5), (0, -3/5, 4/5), (0, -3/5, -4/5), and (0, 3/5, -4/5)" and "(3/5, 0, 4/5), (-3/5, 0, 4/5), (-3/5, 0, -4/5), and (3/5, 0, -4/5)" of the two planes "x = 0" and "y = 0", the obtained equation of the intersection line "x = 0, y = 0" is x = 0 and y = 0 between -4/5 ≤ z ≤ 4/5, and can be judged to be within the boundary ranges of -3/5 ≤ x ≤ 3/5, -3/5 ≤ y ≤ 3/5, and -4/5 ≤ z ≤ 4/5. Therefore, it is judged that the two focus planes intersect with each other, or that the video data are obtained by capturing the same object. Then, the video identifier "543210" is added to the focus-plane metadata in which "Video identifier" is "012345", to be generated as multi-angle metadata. The video identifier "012345" is added to the focus-plane metadata in which "Video identifier" is "543210", to be generated as multi-angle metadata.

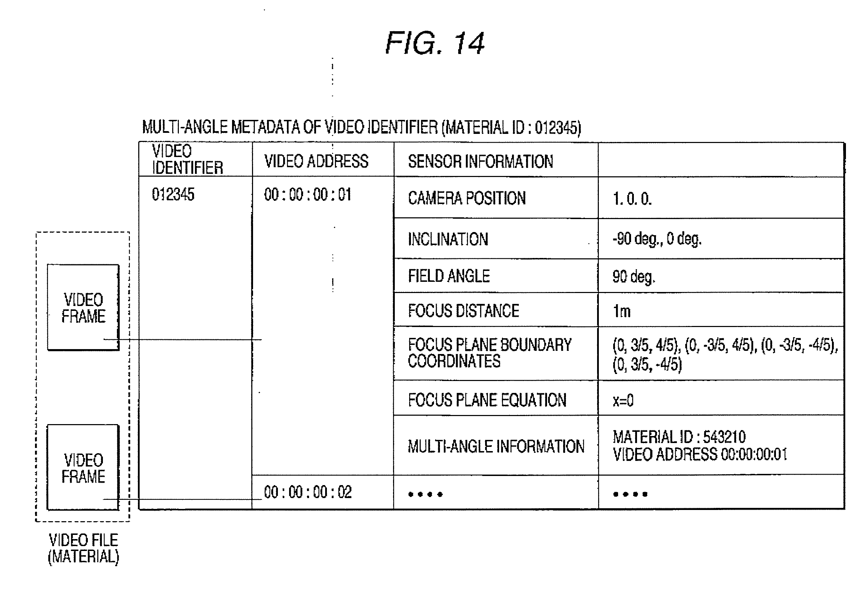

Fig. 14 is a view diagrammatically showing the data structure of generated multi-angle metadata. Multi-angle information including: a material ID which can specify other video data obtained by capturing the same object at the same time; and a video address which can specify a relative position of video data is recorded for each video address. In Fig. 14, the item "Multi-angle information" which is derived in the above is added to the video address "00:00:00:01" shown in Fig. 10, and "Material ID : 543210, video address 00:00:00:01" is input into "Multi-angle information".

As described above, multi-angle metadata are recorded while being correlated with corresponding video data. By using multi-angle metadata, therefore, the multi-angle video searching apparatus 40 can search and extract video data which are obtained by capturing the same object at the same time.

In the embodiment, the configuration example in which the imaging apparatuses are separated from the multi-angle information generating apparatus has been described. Alternatively, the imaging apparatus may include a sensing metadata acquiring unit and a focus-plane metadata deriving unit.

In the embodiment, video data are correlated with various metadata by using a video identifier. Alternatively, various metadata may be converted into streams, and then multiplexed to video data, so that a video identifier is not used.

In the grouping judgment, the grouping judgment may be performed in the following manner. The focus distance is extended or contracted in accordance with the depth of field which is a range in front and rear of the object where focusing seems to be attained. Then, a focus plane is calculated for each focus distance.

Therefore, the work burden in a case such as where multi-angle videos are edited can be remarkably improved.

### [Embodiment 2]

Next, an example in which, in the grouping judgment, the grouping judgment is performed under other judgment conditions will be described. The configurations of the multi-angle information generating apparatus and the multi-angle information generating system, and the procedure of the multi-angle information generating operation are identical with those of Embodiment 1, and hence their description is omitted.

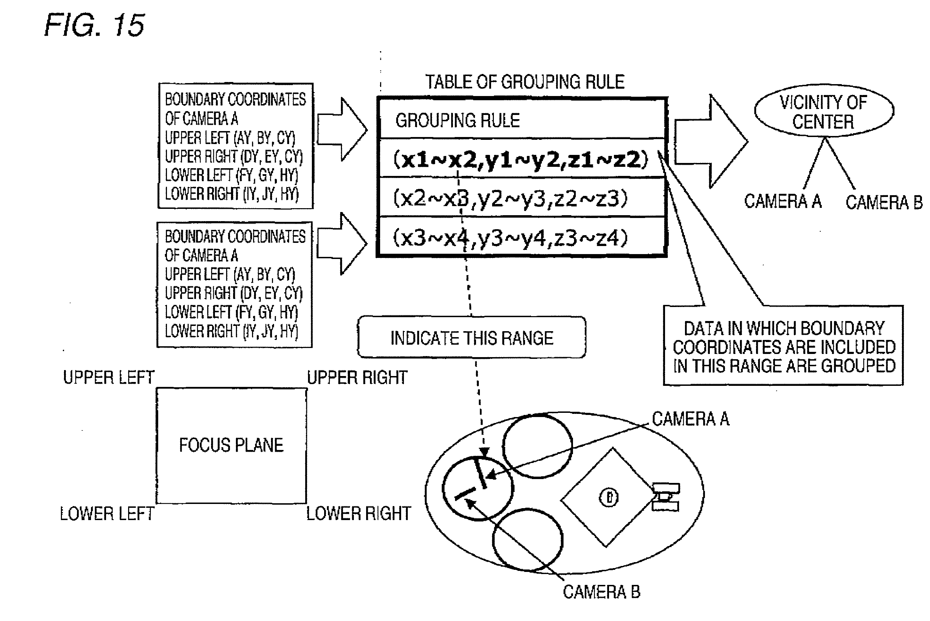

In Embodiment 2, the grouping of images is performed on the basis of a table which stores position information of a focus plane for grouping images into the same group. In Embodiment 2, namely, the grouping judging unit 103 incorporates a table describing a grouping rule, and "judgment of existence in a predetermined region of a focus plane" is performed based on the table. Fig. 15 is a diagram illustrating judgment of existence in a predetermined region of a focus plane. As shown in the figure, video data in which the focus plane exists in a predetermined region that is set in a three-dimensional coordinate region are judged as video data which are to be grouped into the same group, and those in which the focus plane does not exist in the predetermined region are judged as video data which are to be grouped into different groups. In this case, the judgment is irrelevant to whether focus planes intersect or not. According to the grouping judgment conditions, grouping of video data by a designated number of regions, such as video data which are obtained by capturing an object in "the vicinity of the center filed" or "the vicinity of the right filed" in a baseball ground can be performed.

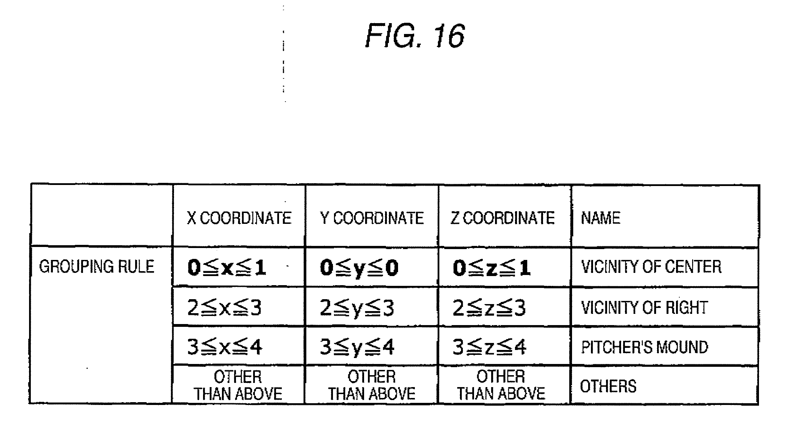

Fig. 16 is a view illustrating a grouping rule which is generated by designating position information of plural regions. As shown in the figure, when four kinds of regions are set, video data are classified into four groups. In Fig. 16, when the x coordinate is 0 ≤ x ≤ 1, for example, the y coordinate is 0 ≤ y ≤ 1, the z coordinate is 0 ≤ z ≤ 1, and the region is named vicinity of center. When the x coordinate is 2 ≤ x ≤ 3, the y coordinate is 2 ≤ y ≤ 3, the z coordinate is 2 ≤ z ≤ 3, and the region is named vicinity of right.

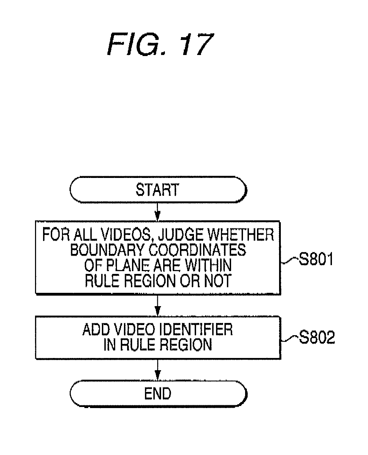

Fig. 17 is a flowchart showing the procedure of the grouping judging operation of the multi-angle information generating apparatus under the judgment conditions in Embodiment 2. First, for all of the obtained focus-plane metadata, the grouping judging unit 103 judges whether the boundary coordinates of the plane are within a region of the grouping rule or not (step S801), If the coordinates are within the region of the grouping rule, corresponding video identifier information and the like are added to the focus-plane metadata to be generated as multi-angle metadata (step S802).

The grouping judging method will be' described by actually using the focus-plane metadata of Fig. 10 and the grouping rule of Fig. 16. Into the focus-plane metadata of Fig. 10, "012345" is input as "Video identifier", and "(0, 3/5, 4/5), (0, -3/5, 4/5), (0, -3/5, -4/5), and (-1, 3/5, -4/5)" are input as "Focus plane boundary coordinates". Here, it is assumed that another focus-plane metadata exists in which "Video identifier" is "543210", and "Focus plane boundary coordinates" are "(3/5, 0, 4/5), (-3/5, 0, 4/5), (-3/5, 0, -4/5), and (3/5, 0, -4/5)". First, "Focus plane boundary coordinates" in which "Video identifier" is "012345" are "(0, 3/5, 4/5), (0, -3/5, 4/5), (0, -3/5, -4/5), (-1, 3/5, -4/5)". Therefore, the coordinates are fit to the region af 0 ≤ x ≤ 1, 0 ≤ y ≤ 1, and 0 ≤ z ≤ 1, and grouped into vicinity of center. Next, "Focus plane boundary coordinates" in which "Video identifier" is "543210" are "(3/5, 0, 4/5), (-3/5, 0, 4/5), (-3/5, 0, -4/5), and (3/5, 0, -4/5)". Therefore, the coordinates are fit to the region of 0 ≤ x ≤ 1, 0 ≤ y ≤ 1, and 0 ≤ z ≤ 1, and similarly grouped into vicinity of center. Accordingly, the two video data are judged to belong to the same group, and the video identifier "543210" and the name "Vicinity of center" are added to the focus-plane metadata in which "Video identifier" is "012345", so that the data are generated as multi-angle metadata. The video identifier "012345" and the name "Vicinity of center" are added to the focus-plane metadata in which "Video identifier" is "543210", so that the data are generated as multi-angle metadata.

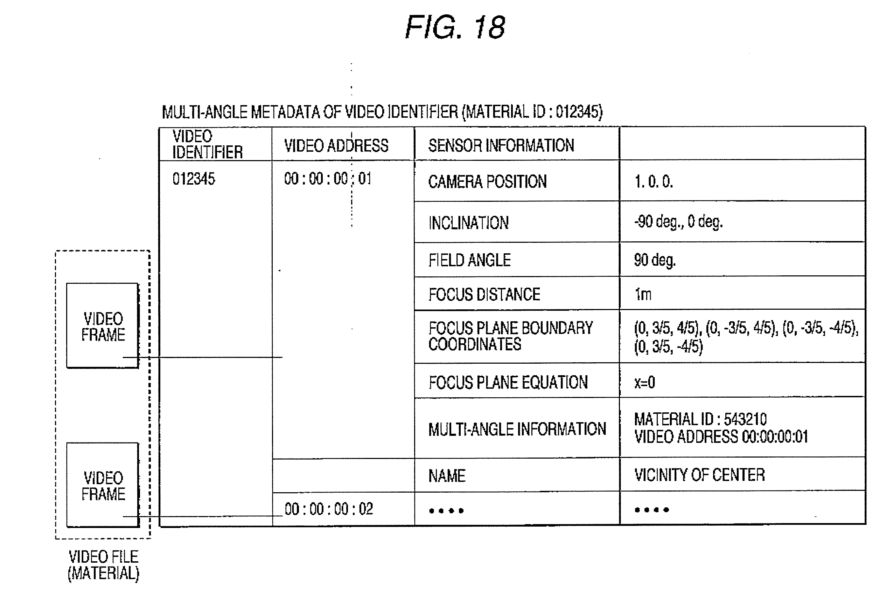

Fig. 18 is a view diagrammatically showing the data structure of generated multi-angle metadata. Multi-angle information including: a material ID which can specify other video data obtained by capturing the same object at the same time; and a video address which can specify a relative position of video data, and information relating to the name of the predetermined region are recorded for each video address. In Fig. 18, the items "Multi-angle information" and "Name" which are derived in the above are added to the video address "00:00:00:01" shown in Fig. 10, "Material ID : 543210, video address 00:00:00:01" is input into "multi-angle information", and "Vicinity of center" is input into "Name".

The judgment on existence in a predetermined region may be performed depending on whether all of focus plane boundary coordinates exists in the region or not, or whether at least one set of coordinates exists in the region or not.

In the embodiment, the grouping rule may be changed in accordance with the situations. The table describing the grouping rule may not be disposed within the grouping judging unit. A configuration where the table is disposed in an external database, and the grouping judging unit refers the external table may be employed.

The embodiment may be configured so that sensing metadata are generated only when sensing information is changed. In the configuration, the data amount to be processed is reduced, and the processing speed can be improved. Actually, it is expected that adjacent image frames often have the same multi-angle information. Therefore, multi-angle metadata may not be generated for each image frame, and multi-angle metadata having a data structure indicating only corresponding relationships between a video address and multi-angle information may be generated. In this case, the data amount to be processed is reduced, and the processing speed can be improved. Furthermore, multi-angle metadata may not be generated for each image frame, but may be generated for each of groups which are classified by the grouping judging unit. According to the configuration, a process of duplicately recording the same information into metadata of respective video data is reduced, and the processing speed can be improved.

The embodiment is configured so that sensing metadata are generated by the imaging apparatus. The invention is not restricted to this. For example, sensing metadata are obtained from the outside of the imaging apparatus.

### [Embodiment 3]

In Embodiments 1 and 2, the example where images which are started to be captured at the same time by plural imaging apparatuses are grouped has been described. In the embodiment, an example where images which are captured at different times by a single imaging apparatus are grouped will be described. In Embodiments 1 and 2, namely, N-th frames of all video data are subjected to the judgment whether images are obtained by capturing the same region or not. By contrast, in the embodiment, judgment is made on combinations of all frames of video data.

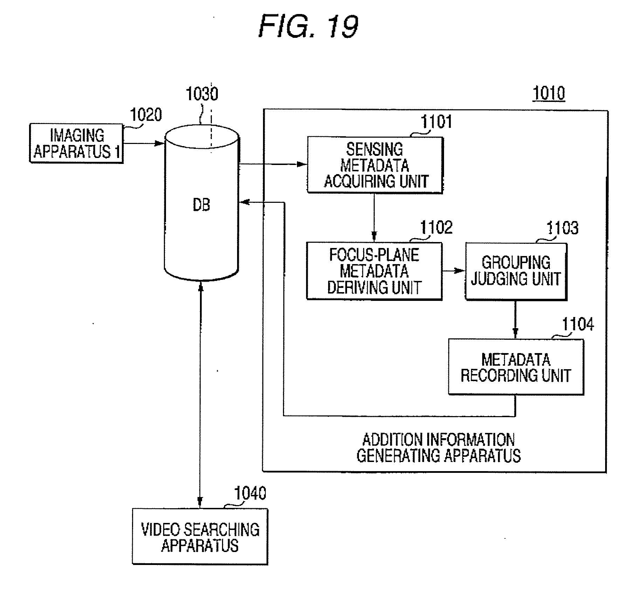

Fig. 19 is a diagram showing the internal configuration of an addition information generating apparatus in the embodiment of the invention, and the configuration of an addition information generating system including the addition information generating apparatus. The addition information generating system shown in Fig. 19 is configured by: an addition information generating apparatus 1010 which groups images obtained by capturing by a single imaging apparatus; an imaging apparatus 1020; a database 1030; and a video searching apparatus 1040. Hereinafter, an example where videos configured by plural images are grouped will be described.

The addition information generating apparatus 1010 includes a sensing metadata acquiring unit 1101, a focus-plane metadata deriving unit 1102, a grouping judging unit 1103, and a metadata recording means 1104.

The sensing metadata acquiring unit "1101 acquires sensor information relating to capturing conditions of the imaging apparatus 1020. The sensing metadata acquiring unit 1101 obtains sensing metadata relating to the position, azimuth, elevation angle, field angle, and focus distance of each of the imaging apparatuses via the database 1030. In the embodiment, the sensing metadata are assumed to be generated by the imaging apparatus 1020. The internal structure of the imaging apparatuses 1020, and the detail of the sensing metadata will be described later.

The focus-plane metadata deriving unit 1102 derives focus planes which include images captured by the imaging apparatus 1020, based on the obtained sensing metadata, and calculates as coordinate values rectangles which indicate capturing focus planes in a real space of the imaging apparatus 1020, on the basis of the sensing metadata. The focus-plane metadata will be described later in detail.

The grouping judging unit 1103 groups images on the basis of positional relationships of the focus planes. While using the focus plane derived by the focus-plane metadata deriving unit 1102, the grouping judging unit judges whether the images are obtained by capturing the same region or not, on the basis of predetermined judgment conditions.

The metadata recording unit 1104 records results of the grouping as addition information with correlating the information with images, and outputs and records information which is correlated with images judged to be those obtained by capturing the same region, as addition metadata into the database 1030. The addition metadata will be described later in detail.

The addition information generating apparatus 1010 is connected to the database 1030 which stores video data from the imaging apparatus 1020, produces the addition metadata as information related to plural video data which are obtained by capturing the same object, on the basis of the sensing metadata obtained from the imaging apparatus, and outputs the data to the database 1030. The video searching apparatus 1040 which is connected to the database 1030 can search video data on the basis of the addition metadata.

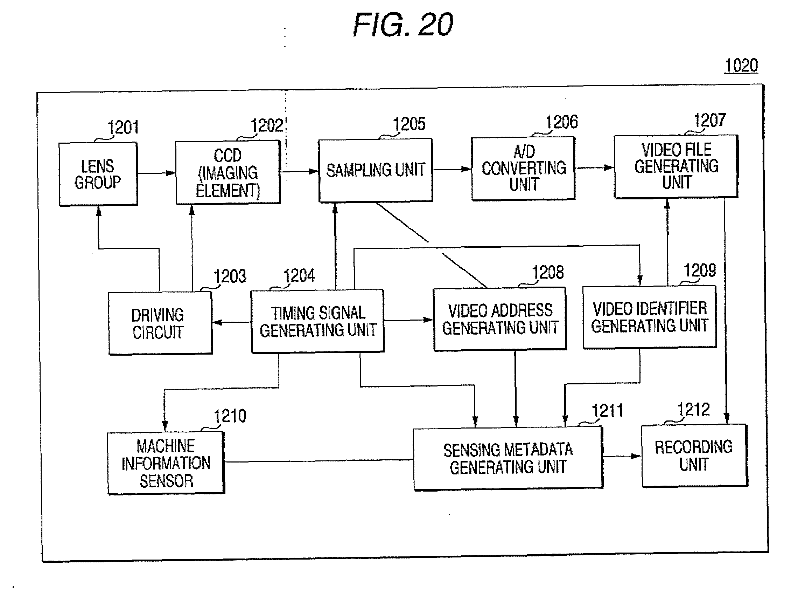

Next, the imaging apparatus will be described. Fig. 20 is a diagram showing the internal configuration of an imaging apparatus which is used in the addition information generating system in the embodiment of the invention. The imaging apparatus 1020 includes a lens group 1201, a CCD 1202, a driving circuit 1203, a timing signal generating unit 1204, a sampling unit 1205, an A/D converting unit 1206, a video file generating unit 1207, a video address generating unit 1208, a video identifier generating unit 1209, a machine information sensor 1210, a sensing metadata generating unit 1211, and a recording unit 1212.

The CCD 1202 is driven in synchronization with a timing signal generated by the timing signal generating unit 1204 connected to the driving circuit 1203, and outputs an image signal of an object image which is incident through the lens group 1201, to the sampling unit 1205.

The sampling unit 1205 samples the image signal at a sampling rate which is specific to the CCD 1202. The A/D converting unit 1206 converts the image signal output from the CCD 1202 to digital image data, and outputs the data to the video file generating unit 1207.

The video address generating unit 1208 starts to produce a video address in response to a signal from the timing signal generating unit 1204. The video identifier generating unit 1209 issues and adds an identifier (for example, a file name or an ID) which correlates a video with sensing metadata described later.

The machine information sensor 1210 is configured by a GPS (Global Positioning System) receiver, a gyro sensor, an azimuth sensor, a range sensor, and a field angle sensor.

The GPS receiver receives radio waves from satellites to obtain distances from three or more artificial satellites the positions of which are previously known, whereby the three-dimensional position (latitude, longitude, altitude) of the GPS receiver itself can be obtained. When this function is used, it is possible to obtain the absolute position of the imaging apparatus on the earth.

The gyro sensor is generally called a three-axis acceleration sensor, and uses the gravity of the earth to detect the degree of acceleration in the direction of an axis as viewed from the sensor, i.e., the degree of inclination in the direction of an axis as a numerical value. When this function is used, it is possible to obtain the inclination (azimuth angle, elevation angle) of the imaging apparatus.

The azimuth sensor is generally called an electronic compass, and uses the magnetism of the earth to detect the direction of north, south, east, or west on the earth. When the gyro sensor is combined with the azimuth sensor, it is possible to indicate the absolute direction of the imaging apparatus on the earth.

The range sensor is a sensor which measure the distance to the object. The sensor emits an infrared ray or an ultrasonic wave from the imaging apparatus toward the object, and can know the distance from the imaging apparatus to the object, i.e., the focus distance by which focusing is to be obtained, from the time which elapses until the imaging apparatus receives the reflection.

The field angle sensor can obtain the field angle from the focal length and the height of the CCD. The focal length can be obtained by measuring the distance between a lens and a light receiving portion, and the height of the light receiving portion is a value which is specific to the imaging apparatus.

On the bases of an output request from the sensing metadata 1211, the machine information sensor 1210 outputs sensing information relating to the position of the imaging apparatus, the azimuth which will be used as a reference, the azimuth angle, the elevation angle, the field angle, and the focus distance, from the GPS (Global Positioning System) receiver, the gyro sensor, the azimuth sensor, the range sensor, and the field angle sensor. The sensing metadata generating unit 1211 obtains the sensing information from the machine information sensor 1210 in accordance with a video address generating timing from the video address generating unit 1208, produces the sensing metadata, and outputs the data to the recording unit 1212. The machine information sensor 1210 and the sensing metadata generating unit 1211 start to operate in response to a signal from the timing signal generating unit 1204.

The production and output of the sensing information are not related to the primary object of the present application, and therefore detailed description of the operation of the sensor is omitted.

The acquisition of the sensing information may be performed at the sampling rate (1/30 sec.) of the CCD, or may be performed every several frames.

In the case where capturing is performed indoors, or where a GPS sensor does not operate, the position information of the capturing place may be manually input. In this case, position information which is input through inputting unit that is not shown is input into the machine information sensor.

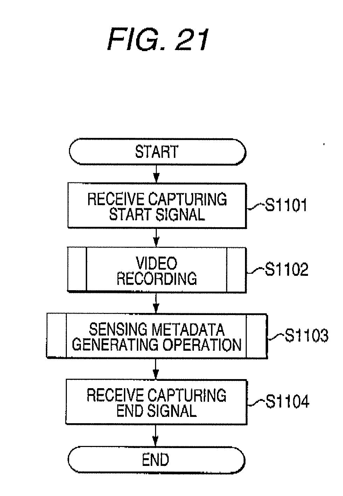

Hereinafter, the sensing metadata generating operation of the imaging apparatus having the above-described configuration will be described. Fig. 21 is a flowchart showing the operation procedure of the imaging apparatus which is used in the addition information generating system in the embodiment of the invention.

First, when depression of a predetermined switch of a main unit of the imaging apparatus, or the like is performed, a capturing start signal is received (step S1101). Then, the imaging apparatus 1020 starts a video recording process (step S1102), and the imaging apparatus 1020 starts a process of generating the sensing metadata (step S1103). When the timing signal generating unit 1204 receives a capturing end signal, the imaging apparatus 1020 terminates the video recording process and the sensing metadata generating process (step S1104).

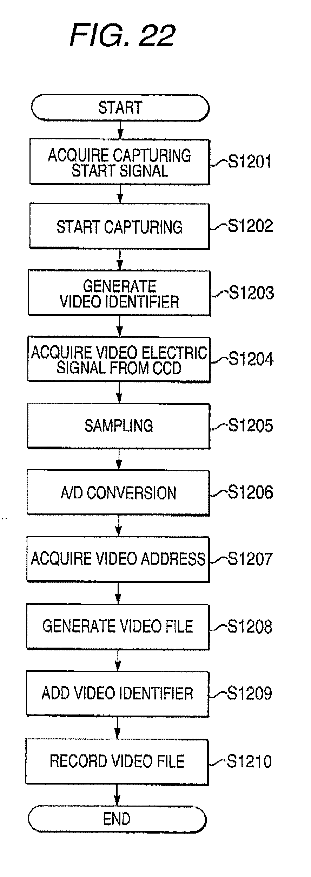

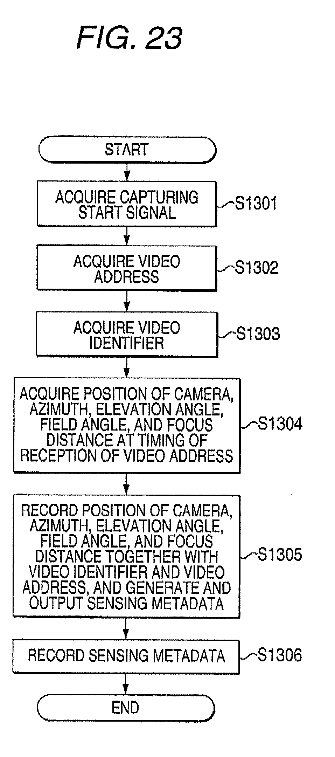

The video recording process which is started in step S1102, and the sensing metadata generating process which is started in step S1103 will be described with reference to Figs. 22 and 23.

Fig. 22 is a flowchart showing the procedure of a video recording operation in step S102. When the capturing start signal is acquired (step S1201), the capturing operation is started in response to an operation instruction command from the timing signal generating unit 1204 (step S1202). Moreover, a video identifier is generated by the video identifier generating unit 1209 in response to an instruction command from the timing signal generating unit 1204 (step S1203).

A video electric signal from the CCD 1202 is acquired (step S1204), the sampling unit 1205 performs sampling on the acquired signal (step S1205), and the A/D converting unit 1206 performs conversion to digital image data (step S1206).

A video address generated by the video address generating unit 1208 is acquired in response to an instruction command from the timing signal generating unit 1204 (step S1207), and a video file is generated by the video file generating unit 1207 (step S1208). Furthermore, the video identifier generated by the video identifier generating unit 1209 is added (step S1209), and the final video file is recorded into the recording unit 1212 (step S1210).

Fig. 23 is a flowchart showing the procedure of the sensing metadata generating operation in step S1103. When the capturing start signal is acquired (step S1301), the sensing metadata generating unit 1211 acquires the video address generated by the video address generating unit 1208 (step S1302). The video identifier generated by the video identifier generating unit 1209 is acquired (step S1303). Furthermore, the sensing metadata generating unit 1211 issues a request for outputting the sensing information to the machine information sensor 1210 simultaneously with the acquisition of the video address, to acquire information of the position of the camera, the azimuth angle, the elevation angle, the field angle, and the focus distance. The position of the camera can be acquired from the GPS receiver, the azimuth angle and the elevation angle can be acquired from the gyro sensor, the focus distance can be acquired from the range sensor, and the field angle can be acquired from the field angle sensor (step S1304).

Next, the sensing metadata generating unit 1211 records the camera position, the azimuth angle, the elevation angle, the field angle, and the focus distance together with the video identifier and video address which are acquired, produces and outputs the sensing metadata (step S1305), and records the data into the recording unit 1212 (step S1306).

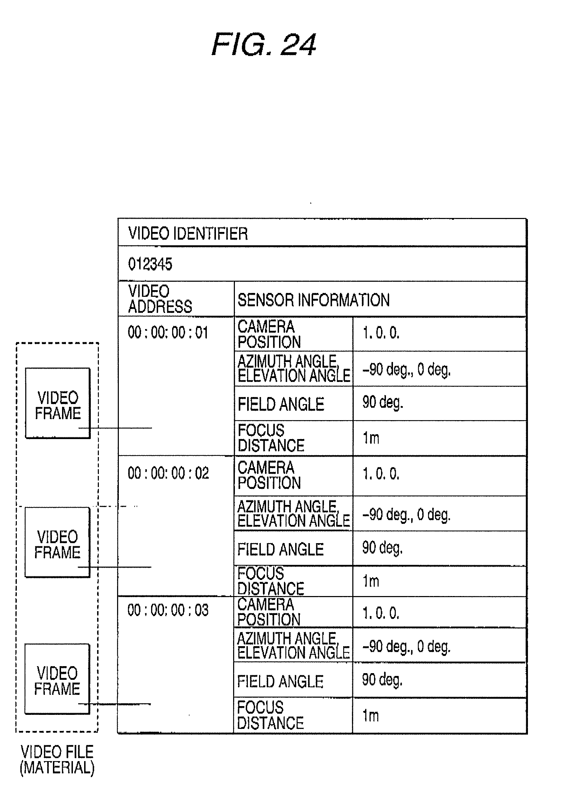

Fig. 24 is a view diagrammatically showing the data structure of generated sensing metadata. A video identifier is added to a series of video data configured by an arbitrary number of frames. By the video identifier, the video data are allowed to uniquely correspond to the sensing metadata. For each video address, the camera coordinates, the azimuth angle, the elevation angle, the field angle, and the focus distance are recorded. The minimum unit of the video address is the sampling rate of the CCD 1202, i.e., a frame. For example, "12345" which is information acquired from the video identifier generating unit 1209 is input into the video identifier of Fig. 24. Moreover, "00:00:00:01" which is information acquired from the video address generating unit 1208 is input into the video address. Into the video address "00:00:00:01", the camera position "1, 0, 0", the azimuth and elevation angles "-90 deg., 0 deg.", the field angle "90 deg.", and the focus distance "1 m" which are information acquired from the machine information sensor 1210 at the timing when the video address is acquired are input. The camera position is expressed by "x, y, z" where x indicates the latitude, y indicates the longitude, and z indicates the altitude (above sea level). The actually input values are the latitude, longitude, and altitude which are acquired by the GPS receiver. In the embodiment, however, it is assumed that latitude x = 1, longitude y = 0, and altitude z = 0 are obtained, for the sake of simplicity in description, Into the next video address, "00:00:00:02" which is information acquired from the video address generating unit 1208 is input. Into the video address "00:00:00:02", the camera position "1, 0, 0", the azimuth and elevation angle "-90 deg., 0 deg.", the field angle "90 deg.", and the focus distance "1 m" which are information acquired from the machine information sensor 1210 at the timing when the video address is acquired are input. Into the next video address, "00:00:00:03" which is information acquired from the video address generating unit 208 is input. Into the video address "00:00:00:03", the camera position "1, 0, 0", the azimuth and elevation angle "-90 deg., 0 deg.", the field angle "90 deg.", and the focus distance "1 m" which are information acquired from the machine information sensor 1210 at the timing when the video address is acquired are input.

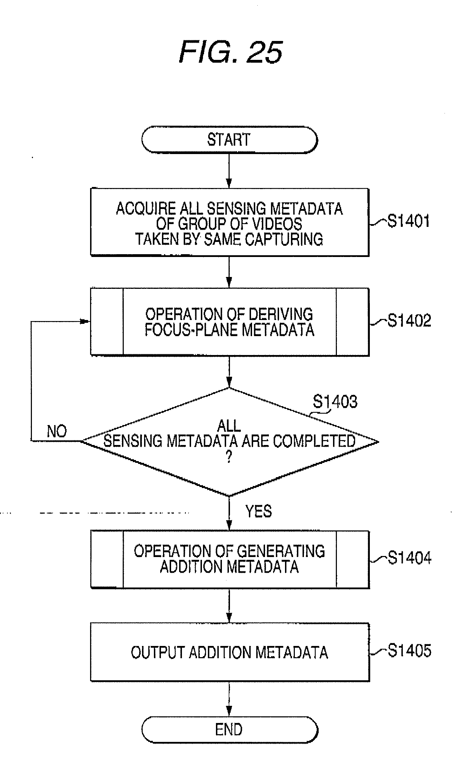

Next, an addition information generating operation of the addition information generating apparatus having the above-described configuration will be described. Fig. 25 is a flowchart showing the procedure of the addition information generating operation of the addition information generating apparatus in the embodiment of the invention.

First, the sensing metadata acquiring unit 1101 of the addition information generating apparatus 1010 acquires all sensing metadata of a group of videos which are taken by the imaging apparatus 1020 (step S1401). Next, the focus-plane metadata deriving unit 1102 derives focus-plane metadata on the basis of the acquired sensing metadata (step S1402).

Then, the focus-plane metadata deriving unit 1102 determines whether the derivation of focus-plane metadata is completed for all of sensing metadata or not. If not completed, the operation of deriving focus-plane metadata in step S1402 is repeated. By contrast, if the derivation of focus-plane metadata is completed for all of sensing metadata, the process then transfers to the operation of generating addition metadata (step S1403). Next, the grouping judging unit 1103 produces addition metadata on the basis of the focus-plane metadata acquired from the focus-plane metadata deriving unit 1102 (step S1404).

Finally, the metadata recording unit 1104 outputs the addition metadata acquired from the grouping judging unit 1103, toward the database 1030 (step S1405).

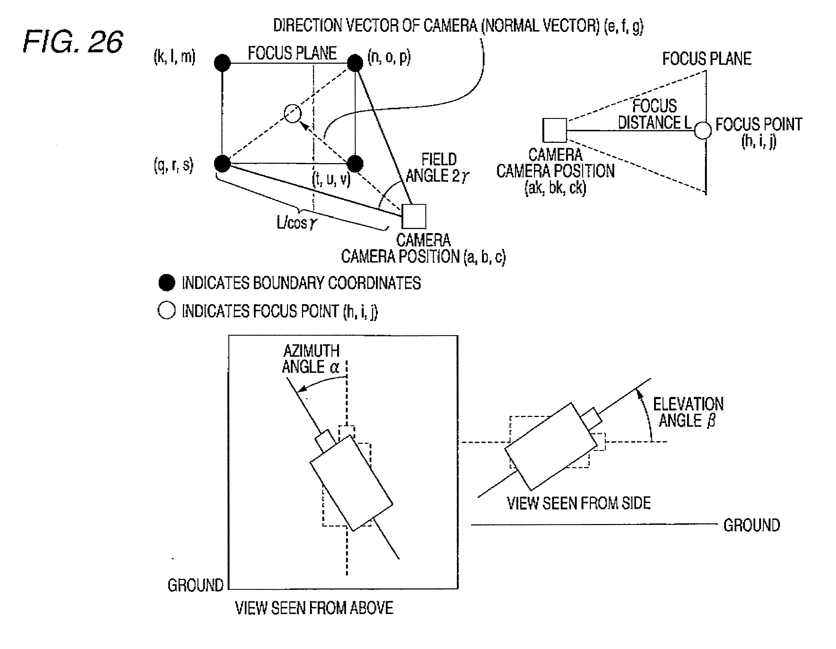

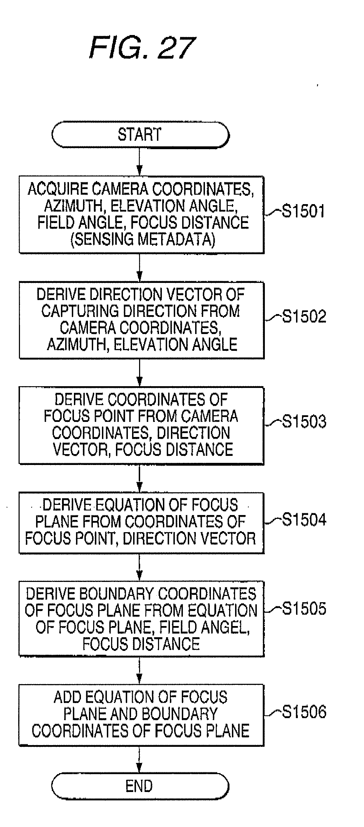

The operation of deriving focus-plane metadata in step S1402 will be described with reference to Figs. 26 and 27. Fig. 26 is a diagram illustrating a focus plane. A focus plane is a rectangular plane indicating an imaging region where, when capturing is performed, the focus, or the so-called focal point is attained, and can be expressed by coordinate values of the four corners of the rectangle (referred to as boundary coordinates). As shown in the figure, the distance from the imaging apparatus (camera) to the focus plane is determined by the focus distance, i.e., the focal length, and the size of the rectangle is determined by the field angle of the camera. The center of the rectangle is the focal point.

The flowchart of Fig. 27 showing the procedure of the focus plane deriving operation of the addition information generating apparatus will be described. First, the focus-plane metadata deriving unit 1102 acquires sensing metadata (step S1501).

In the case where, as shown in Fig. 26, the sensing information in a camera and at an arbitrary timing is the camera position of (a, b, c), the azimuth angle of α deg., the elevation angle of β deg., the field angle of 2γ deg., and the focus distance of L (m), the direction vector of the camera in which the camera position of (a, b, c) is set as the original can be obtained from the azimuth angle of α deg. and the elevation angle of β deg. From the sensing information, the direction vector of the camera is (-sin α cos β, cos α cos β, sin β). The obtained direction vector of the camera is assumed as (e, f, g). The camera direction vector (e, f, g) perpendicularly penetrates the focus plane, and hence is a normal vector to the focus plane (step S1502).

Next, from the camera direction vector (e, f, g) and the camera position (a, b, c), the equation of the straight line passing the camera position (a, b, c) and the focus point can be derived. When an intermediate parameter z is used, the equation of the straight line can be expressed as (ez, fz, gz). From the equation of the straight line, the coordinates which are on the straight line, and which are separated by a distance L from the camera position (a, b, c) can be derived as a focus point. The expression for obtaining is L = √(ez - a)² + (fz - b)² + (gz - c)². The intermediate parameter z is derived from this expression. When L = √(ez - a)² + (fz - b)² + (gz - c)² is solved, z = {(ae + bf + cg) ± √(ae + bf + cg)² - (e + f + g)(a² + b² + c² - L²)}/ (e + f + g) is obtained, and the focus point is attained by substituting the obtained z in (ez, fz, gz) (step S1503).

The obtained focus point is expressed as (h, i, j). The equation of the focus plane can be derived from the normal vector (e, f, g) and the focus point (h, i, j). The equation of the focus plane is ex + fy + gz = eh + fi + gj (step S1504).

From the field angle of 2γ deg., the distance from the camera position (a, b, c) to the boundary coordinates of the focus plane is L/cos γ. It can be the that the boundary coordinates are coordinates which exist on a sphere centered at the camera position (a, b, c) and having a radius of L/cos γ, and in the focus plane obtained in the above. The equation of the sphere centered at the camera position (a, b, c) and having a radius of Ucos y is (x -a)² + (y - b)² + (z - c)² = (L/cos γ)².

The features of the plane to be captured by the camera, i.e., those that a horizontal shift does not occur (namely, the height (z-axis) of the upper side of the plane is constant, and also the height (z-axis) of the lower side is constant), and that the ratio of the length and the width in the focus plane is fixed are used as conditions for solving the equation. Since z is constant (namely, the height (z-axis) of the upper side of the plane is constant, and also the height (z-axis) of the lower side is constant), z can be set as two values z1 and z2. From the above, equations of ex + fy + gz1 = eh + fi + gj, ex + fy + gz2 = eh + fi + gj, (x -a)² + (y - b)² + (z1 - c)² = (L/cos γ)², and (x -a)² + (y - b)² + (z2 - c)² = (L/cos γ)² are obtained.

When the four equations are solved, four boundary coordinates in which the values of x and y are expressed respectively by z1 and z2 can be derived. First, the case where z is z1 or ex + fy + gz1 = eh + fi + gj and (x -a)² + (y - b)²+ (z1 - c)² = (L/cos γ)² will be considered. For the sake of simplicity, eh + fi + gj - gz1 = A, (z1 - c)² = B, and {L/COS γ)² = C are set, and then x + fy + gz1 = A and (x - a)² + (y - b)² + B = C are obtained. When x is eliminated from the two equations and A - ea = D, e²(B - C) = E, e² + f² = F, -(2DF + 2be²) = G, and e²b² + E = H are set, Fy² + Gy + H = 0 is obtained, and the value of y is y = (-G ± √G² - 4FH). Similarly, x = (A - f(-G ± √G² - 4FH)/2F) can be obtained. For the sake of simplicity, the obtained x and y are set as X1, Y1, X2, Y2, respectively.

Next, x and y are obtained also in the case where z is z2 or ex + fy + gz2 = eh + fi + gj and (x -a)² + (y - b)² + (z2 - c)² = (L/cos γ)². The deriving method in the case of z2 is identical with that in the case of z1, and hence its description is omitted. The obtained x and y are set as X3, Y3, X4, Y4, respectively. Therefore, the four boundary coordinates are (X1, Y1, Z1), (X2, Y2, Z1), (X3, Y3, Z2), and (X4, Y4, Z2),

Since the ratio of the length and the width in the focus plane is fixed (here, length : width = P : Q), the length of the upper side : the length of the right side = P : Q and the length of the lower side : the length of the left side = P : Q can be derived. Diagrammatically, (X1, Y1, Z1), (X2, Y2, Z1), (X3, Y3, Z2), and (X4, Y4, Z2) are set as the upper left (X1, Y1, Z1), the upper right (X2, Y2, Z1), the lower left (X3, Y3, Z2), and the lower right (X4, Y4, Z2). The length of the upper side = √(X1 - X2)² + (Y1 - Y2)², the length of the right side = √(X2 - X4)² + (Y2 - Y4)² + (Z1 - Z2)², the length of the lower side = √(X3 - X4)² + (Y3 - Y4)², and the length of the left side = √(X1 - X3)² + (Y1 - Y3)² + (Z1 - Z2)². Therefore, √(X1 - X2)² + (Y1 - Y2)² : √(X2- X4)² + (Y2 - Y4)² + (Z1 - Z2)² = P : Q, and √(X3 - X4)² + (Y3 - Y4)² : √(X1 - X3)² + (Y1 - Y3)² + (Z1 - Z2)² = P : Q are attained, and two equations can be obtained. The upper left (X1, Y1, Z1), the upper right (X2, Y2, Z1), the lower left (X3, Y3, Z2), and the lower right (X4, Y4, Z2) are values expressed by z1 and z2. When the replacement for the simplification is returned to the original one, therefore, simultaneous equations for z1 and z2 can be obtained from √(X1 - X2)² + (Y1 - Y2)² : √(X2 - X4)² + (Y2 - Y4)² + (Z1 - Z2)² = P : Q, and √(X3 - X4)² + (Y3 - Y4)² : √(X1 - X3)² + (Y1 - Y3)² + (Z1 - Z2)² = P : Q, and z1 and z2 can be obtained. The expressions of z1 and z2 are complicated, and hence their description is omitted. When the obtained z1 and z2 are substituted in the upper left (X1, Y1, Z1), the upper right (X2, Y2, Z1), the lower left (X3, Y3, Z2), and the lower right (X4, Y4, Z2), it is possible to obtain boundary coordinates. The obtained boundary coordinates are set as the upper left (k, l, m), the upper right (n, o, p), the lower left (q, r, s), and the lower right (t, u, v) (step S505).

Finally, the focus-plane metadata deriving unit 1102 adds the calculated boundary coordinate information of the four point to sensing metadata for each of the video addresses, to produce the data as focus-plane metadata (step S1506).

Hereinafter, the method of deriving the focus plane and the boundary coordinates will be described by actually using the sensing metadata of Fig. 24. The sensing metadata of Fig. 24 which are used in the description are the camera position (1, 0, 0), the azimuth and elevation angles "-90 deg., 0 deg.", the field angle "90 deg.", and the focus distance "1 m" at the video address "00:00:00:01". First, the azimuth and elevation angles "-90 deg., 0 deg." are decomposed into x, y, and z components having a magnitude of 1, and the vector indicating the camera direction is (-1, 0, 0) from the difference with respect to the camera position (1, 0, 0). The vector indicating the camera direction is a normal vector to the focus plane.

Next, from the normal vector (-1, 0, 0) and the camera position (1, 0, 0), it is possible to obtain the equation of a straight line in which the normal vector is (-1, 0, 0), and which passes the camera position (1, 0, 0). The equation of the straight line is y = 0, z = 0. The coordinates which is on the straight line, and in which the focus distance from the camera position (1, 0, 0) is 1, i.e., the coordinates of the focus point are (0, 0, 0) from the equation of the straight line y = 0, z = 0 and the focus distance = 1.

Next, from the coordinates (0, 0, 0) of the focus point and the normal vector (-1, 0, 0), the equation of the focus plane is derived. From the coordinates (0, 0, 0) of the focus point and the normal vector (-1, 0, 0), the equation of the focus plane is x = 0.

Since the field angle is 90 deg., the distance to the boundary coordinates on the focus plane is 1/cos 45°, i.e., √2. It can be said that the boundary coordinates exist on a sphere having a radius of √2 and centered at the camera position (1, 0, 0), and in the focus plane. The equation of the sphere having a radius of √2 and centered at the camera position (1, 0, 0) is (x -1)² + y² + z² = 2. From the sphere equation (x - 1)² + y² + z² = 2 and the equation of the focus plane x = 0, y² + z² = 1 can be derived. When it is assumed that the screen size captured by the camera has a ratio of the length and width of 4 : 3, z = 4/3y is obtained. When solving y² + z² = 1 and z = 4/3y, y = ± 3/5 and z = ± 4/5 can be derived. Therefore, the boundary coordinates are (0, 3/5, 4/5), (0, -3/5, 4/5), (0, -3/5, -4/5), and (0, 3/5, -4/5).

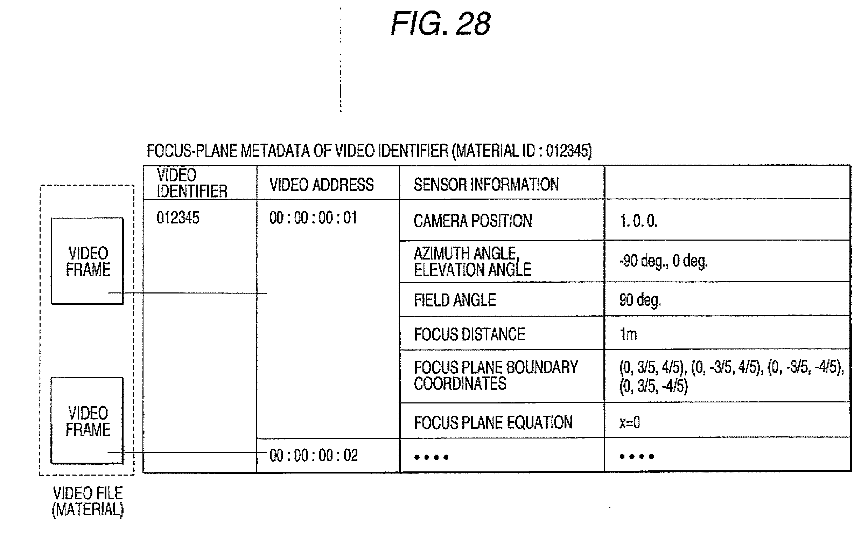

Fig. 28 is a view diagrammatically showing the data structure of the generated focus-plane metadata. For each video address, the boundary coordinates of the focus plane and the equation of the focus plane are recorded. In Fig. 28, the items of "Focus plane boundary coordinates" and "Focus plane equation" which are derived as described above are added to the video address "00:00:00:01" shown in Fig. 24, "(0, 3/5, 4/5), (0, -3/5, 4/5), (0, -3/5, -4/5), and (0, 3/5, -4/5)" is input into "Focus plane boundary coordinates", and "x = 0" is input into "Focus plane equation". When focus-plane metadata are added to images, grouping of the images which will be described later is enabled.

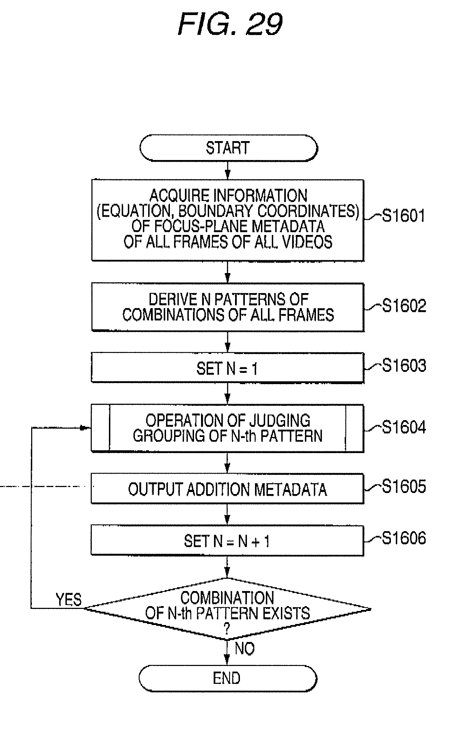

Next, the operation of generating addition metadata in step S1404 will be described with reference to Fig. 29. Fig. 29 is a flowchart showing the procedure of the addition metadata generating operation of the addition information generating apparatus. First, the grouping judging unit 1103 obtains information (equation) and boundary coordinates of the focus-plane metadata of all frames of all videos (step S1601), and derives N patterns which are combinations of all the frames (step S1602).

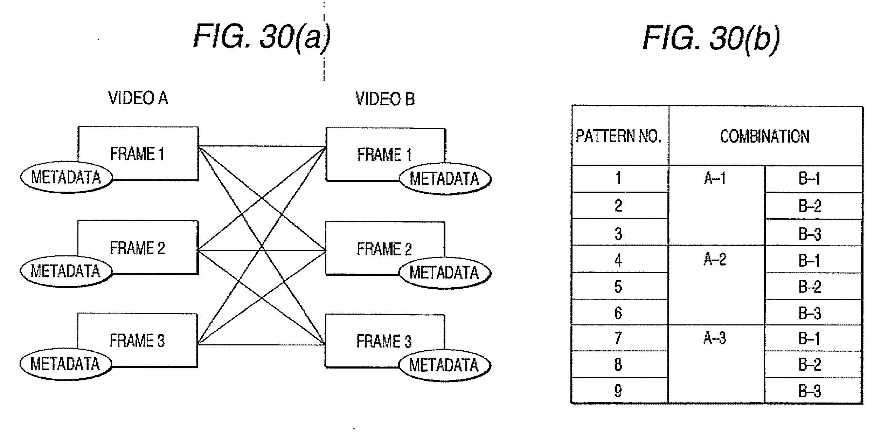

Fig. 30 is a view showing an image of combinations of all frames. Fig. 30(b) shows combinations of all frames of a video A consisting of frames 1 to 3 shown in Fig. 30(a), and a video B consisting of frames 1 to 3. With respect to the frame 1 of the video A, for example, there are three patterns, or the combination with the frame 1 of the video B (first pattern), the combination with the frame 2 of the video B (second pattern), and the combination with the frame 3 of the video B (third pattern). Similarly, there are combinations consisting of fourth to sixth patterns with respect to the frame 2 of the video A, and combinations consisting of seventh to ninth patterns with respect to the frame 3 of the video A.

Next, the pattern number N of the combinations is initialized to 1 (step S1603), and the grouping judging unit 1103 executes the grouping judging operation on the N-th pattern to produce addition metadata (step S1604). Next, the grouping judging unit 103 outputs the generated addition metadata to the metadata recording unit 104 (step S1605). Then, the constant N is incremented by 1 (step S1606), and the grouping judging unit 1103 judges whether the next combination pattern (N-th pattern) exists or not (step S1607). If the next combination pattern exists, the process returns to step S1604, and repeats the addition metadata generating operation. By contrast, if the next combination pattern does not exist, the addition metadata generating operation is ended.

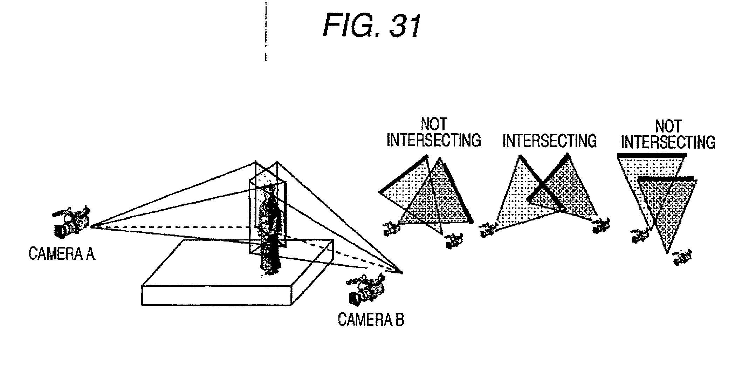

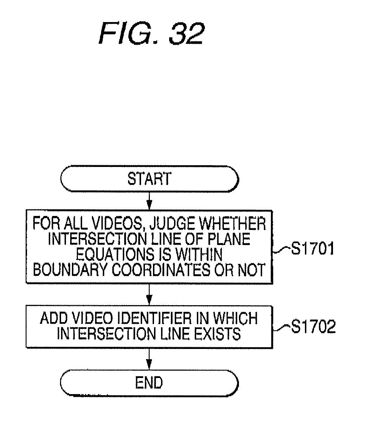

The grouping judging operation in step S1604 will be described with reference to Figs. 31 and 32. The grouping judging operation is an operation of, based on predetermined judgment conditions, grouping video data which are obtained by capturing the same object, from plural captured video data. In Embodiment 3, images in which focus planes intersect with each other are classified into the same group. In Embodiment 3, namely, "judgment of intersection of focus planes" is performed as judgment conditions of grouping. Fig. 31 is a diagram illustrating the judgment of intersection of focus planes. As shown in the figure, video data of cameras (imaging apparatuses) in which focus planes intersect with each other are judged as video data which are obtained by capturing the same object, and video data in which focus planes do not intersect with each other are judged as video data which are obtained by capturing different objects.

Fig. 32 is a flowchart showing the procedure of the grouping judging operation of the addition information generating apparatus. First, for all of the acquired focus-plane metadata, the grouping judging unit 1103 judges whether an intersection line of plane equations is within the boundary coordinates or not (step S1701). If the intersection line of plane equations is within the boundary coordinates, corresponding video identifier information and a video address indicating the n-th frame are added to the focus-plane metadata to be generated as addition metadata (step S1702).

Hereinafter, the grouping judging method will be described by actually using the focus-plane metadata of Fig. 28. Into the focus-plane metadata of Fig. 28, "012345" is input as "Video identifier", "(0, 3/5, 4/5), (0, -3/5, 4/5), (0, -3/5, -4/5), and (0, 3/5, -4/5)" are input as "Focus plane boundary coordinates", and "x = 0" is input as "Focus plane equation". Here, it is assumed that another focus-plane metadata exists in which "Video identifier" is "543210", "Focus plane boundary coordinates" are "(3/5, 0, 4/5), (-3/5, 0, 4/5), (-3/5, 0, -4/5), and (3/5, 0, -4/5)", and "Focus plane equation" is "y = 0". Since the equations of the focus planes are "x = 0" and "y = 0", the equation of the intersection line is "x = 0, y = 0".

Next, it is judged whether the intersection line of the plane equations is within the boundary coordinates or not. In the boundary ranges of -3/5 ≤ x ≤ 3/5, -3/5 ≤ y ≤ 3/5, and -4/5 ≤ z ≤ 4/5 expressed by the boundary coordinates "(0, 3/5, 4/5), (0, -3/5, 4/5), (0, -3/5, -4/5), and (0, 3 /5, -4/5)" and "(3/5, 0, 4/5), (-3/5, 0, 4/5), (-3/5, 0, -4/5), and (3/5, 0, -4/5)" of the two planes "x = 0" and "y = 0", the obtained equation of the intersection line "x = 0, y = 0" is x = 0 and y = 0 between -4/5 ≤ z ≤ 4/5, and can be judged to be within the boundary ranges of -3/5 ≤ x ≤ 3/5 , -3/5 ≤ y ≤ 3/5, and -4/5 ≤ z ≤ 4/5. Therefore, it is judged that the two focus planes intersect with each other, or that the video data are obtained by capturing the same object. Then, the video identifier "543210" is added to the focus-plane metadata in which "Video identifier" is "012345", to be generated as addition metadata. The video identifier "012345" is added to the focus-plane metadata in which "Video identifier" is "543210", to be generated as addition metadata.

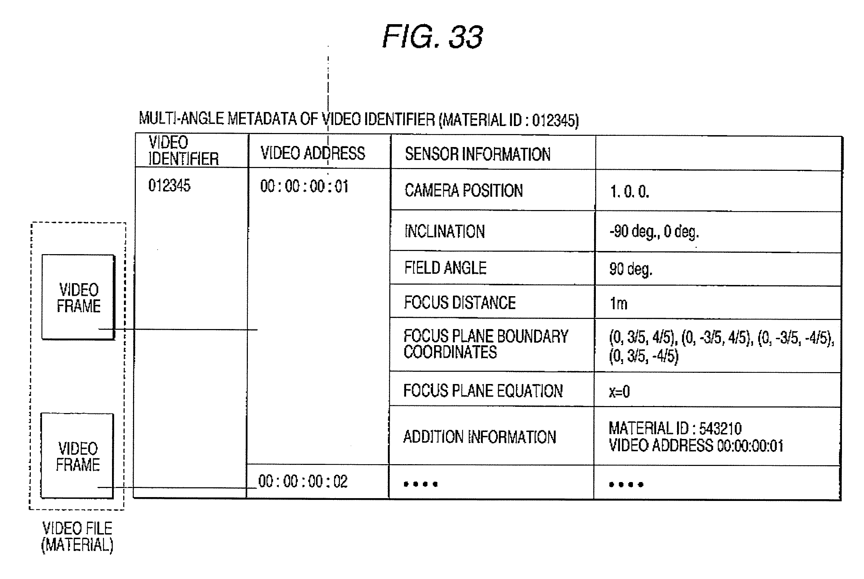

Fig. 33 is a view diagrammatically showing the data structure of generated metadata. Addition information including: a material ID which can specify other video data obtained by capturing the same object; and a video address which can specify a relative position of video data is recorded for each video address. In Fig. 33, the item "Addition information" which is derived in the above is added to the video address "00:00:00:01" shown in Fig. 28, and "Material ID : 543210, video address 00:00:00:01" is input into "Addition information".

As described above, metadata are recorded while being correlated with corresponding video data. By using metadata, therefore, the video searching apparatus 1040 can search and extract video data which are obtained by capturing the same object at different times.

In the embodiment, the configuration example in which the imaging apparatus is separated from the addition information generating apparatus has been described: Alternatively, the imaging apparatus may include a sensing metadata acquiring unit and a focus-plane metadata deriving unit.

In the embodiment, video data are correlated with various metadata by using a video identifier. Alternatively, various metadata may be converted into streams, and then multiplexed to video data, so that a video identifier is not used.

In the grouping judgment, the grouping judgment may be performed in the following manner. The focus distance is extended or contracted in accordance with the depth of field which is a range in front and rear of the object where focusing seems to be attained. Then, a focus plane is calculated for each focus distance.

Therefore, videos which are taken by a single camera at different times can be grouped. When a photograph or video which is taken by a usual user is registered in the database, for example, it is automatically grouped according to the place where the object exists. Accordingly, the work burden in a case such as where videos are edited can be remarkably improved.

In the above, the example in which images are grouped by using focus planes has been described. When focus-plane metadata are added to images, the invention can be applied to a use other than grouping of images.

While the invention has been described in detail and referring to the specific embodiments, it is obvious to those skilled in the art that various changes and modifications may be applied without departing the sprit and scope of the invention.
The application is based on Japanese Patent Application (No. 2005-157179) filed May 30, 2005, and Japanese Patent Application (No. - 2006-146909) filed May 26, 2006, and their disclosure is incorporated herein by reference.

### Industrial Applicability

According to the invention, when grouping of images is performed on the basis of positional relationships of focus planes by adding the positions of the focus planes as metadata, the processing load can be reduced as compared with the conventional technique in which grouping is performed by image analysis. Therefore, the invention has an effect that search and extraction of images obtained by capturing the same region are enabled to be performed at low load and in an easy manner, and is useful in a metadata adding apparatus which adds metadata to an image obtained by capturing by an imaging apparatus, a metadata adding method, and the like.

## Claims

1. A metadata adding apparatus for adding metadata to an image captured by an imaging apparatus, comprising:
a sensing information acquiring unit which acquires sensor information relating to a capturing condition of the imaging apparatus;
a focus-plane deriving unit which derives a position of a focus plane which is an imaging plane of the captured image, based on the acquired sensor information; and
a metadata adding unit which adds the derived position of the focus plane as the metadata to the captured image.

2. The metadata adding apparatus, according to claim 1, further comprising:
a grouping unit which groups a plurality of the images based on positional relationships among a plurality of the focus planes; and
an addition information recording unit which records results of the grouping as addition information while correlating the addition information with the images.

3. The metadata adding apparatus, according to claim 2, wherein the grouping unit groups the images which have the focus planes intersected with each other, into a same group.

4. The metadata adding apparatus according to claim 2, wherein, based on a table which stores the positional relationships among the focus planes, the grouping unit groups the images having the focus planes which are included in the positional relationships, into a same group.

5. A metadata adding method of adding metadata to an image captured by an imaging apparatus, comprising:
a sensing information acquiring step of acquiring sensor information relating to a capturing condition of the imaging apparatus;
a focus-plane deriving step of deriving a position of a focus plane which is an imaging plane of the captured image, based on the acquired sensor information; and
a metadata adding step of adding the derived position of the focus plane as the metadata to the captured image.

6. The metadata adding method according to claim 5, further comprising:
a grouping step of a plurality of the grouping images based on positional relationships among the plurality of the focus planes; and
an addition information recording step of recording results of the grouping as addition information while correlating the addition information with the images.

7. The metadata adding method according to claim 6, wherein the grouping step groups the images which have the focus planes intersected with each other, into a same group.

8. The metadata adding method according to claim 6, wherein, based on a table which stores the positional relationships among the focus planes, the grouping step groups the images having the focus planes which are included in the positional relationships, into a same group.
